# EUROPEAN PATENT APPLICATION

(11) **EP 4 492 897 A1**
(43) Date of publication of application: **15.01.2025**
(21) Application number: 23784354.5
(22) Date of filing: 07.04.2023
(51) Int. Cl.: H04W 72/04

(54) **UPLINK TRANSMISSION METHOD AND COMMUNICATION APPARATUS**

(30) Priority: 08.04.2022 CN 202210370157
(71) Applicant: Huawei Technologies Co., Ltd., Shenzhen, Guangdong 518129 (CN)
(72) Inventor: WANG, Feng, Shenzhen, Guangdong 518129 (CN); DING, Mengying, Shenzhen, Guangdong 518129 (CN); ZHANG, Xu, Shenzhen, Guangdong 518129 (CN)
(74) Representative: Epping - Hermann - Fischer
(86) International application number: PCT/CN2023/086899
(87) International publication number: WO 2023/193792

(57) **Abstract**

This application provides an uplink transmission method and a communication apparatus. In the method, a terminal device may determine, based on an RRC parameter and/or indication signaling from a network side, according to a predefined selection policy, based on a combination of supported carriers that may be for parallel sending, in a predefined manner, or based on one or a combination of any two or more of these implementations in a plurality of possible radio frequency chain state supporting current uplink transmission, a radio frequency chain state that is during the current uplink transmission. This can resolve a problem that the terminal device cannot determine the radio frequency chain state that is during the current uplink transmission because a plurality of radio frequency chain states supporting the current uplink transmission exist when the network side implicitly indicates the terminal device to perform radio frequency chain switching by indicating a quantity of antenna ports to be used by the terminal device to perform uplink transmission on a carrier, to support a scenario in which the terminal device is configured by the network side to perform radio frequency chain switching on carriers on at least two frequency bands.

## Description

This application claims priority to Chinese Patent Application No. 202210370157.8, filed with the China National Intellectual Property Administration on April 8, 2022 and entitled "UPLINK TRANSMISSION METHOD AND COMMUNICATION APPARATUS", which is incorporated herein by reference in its entirety.

### TECHNICAL FIELD

Embodiments of this application relate to the field of wireless communication technologies, and more specifically, to an uplink transmission method and a communication apparatus.

### BACKGROUND

It is proposed in 3rd generation partnership project (3rd generation partnership project, 3GPP) Release 16 (Release 16, R16) that, if user equipment (user equipment, UE) supports two uplink carriers, the UE may perform radio frequency chain switching on the two uplink carriers, to improve radio frequency chain utilization. A protocol defines sending behavior of the UE on the two carriers, in which a carrier 1 and a carrier 2 represent the two carriers. In a case, the UE has one radio frequency chain on the carrier 1, and has one radio frequency chain on the carrier 2. In another case, the UE has no radio frequency chain on the carrier 1, but has two radio frequency chains on the carrier 2. It can be learned that the UE supports a maximum of one radio frequency chain on the carrier 1, and supports a maximum of two radio frequency chains on the carrier 2. Release 17 (Release 17, R17) is an enhancement of R16. In an aspect, an enhancement in a quantity of radio frequency chains is exhibited. To be specific, a total quantity of radio frequency chains does not change, but a maximum quantity of radio frequency chains on the carrier 1 changes from 1 to 2. Therefore, there is one more case in comparison with R16, that is, the UE has two radio frequency chains on the carrier 1, but has no radio frequency chain on the carrier 2. In another aspect, an enhancement in a quantity of carriers is exhibited. To be specific, in R16, switching is performed on two carriers, but in R17, the UE is allowed to perform radio frequency chain switching on three carriers on two frequency bands.

With continuous development and evolution of communication technologies, in Release 18 (Release 18, R18) currently under discussion in the industry, a quantity of frequency bands is intended to be extended from two in R17 to more than two, for example, 3 or 4, but the total quantity of radio frequency chains is still limited to 2. However, before the UE performs one uplink transmission, a network side needs to indicate the UE to perform radio frequency chain switching. In R16 or R17, the network side does not directly indicate the UE to perform radio frequency chain switching on the carriers, but implicitly indicates the UE to perform radio frequency chain switching based on a mapping relationship between radio frequency chains and antenna ports for the uplink transmission by indicating a quantity of antenna ports for uplink transmission to the UE. However, in R18, after the quantity of frequency bands in which radio frequency chain switching may be performed is extended from two to more than two, if the network side continues to implicitly indicate the UE to perform radio frequency chain switching by indicating the quantity of antenna ports for uplink transmission, the UE may fail to determine a quantity of radio frequency chains to be used for current uplink transmission. This is because a plurality of radio frequency chain states supporting the current uplink transmission exist based on the quantity, indicated by the network side, of antenna ports for uplink transmission, and therefore the UE cannot determine a specific radio frequency chain state that is in the plurality of possible radio frequency chain states supporting the current uplink transmission and to which a radio frequency chain state in last uplink transmission is switched. As a result, the UE cannot determine how to perform radio frequency chain switching for the current uplink transmission.

### SUMMARY

Embodiments of this application provide an uplink transmission method and a communication apparatus, so that a terminal device can determine, in a plurality of possible radio frequency chain states supporting uplink transmission, one radio frequency chain state as a radio frequency chain state that is during the uplink transmission.

According to a first aspect, an uplink transmission method is provided. The method includes:
A terminal device receives first information, where the first information indicates the terminal device to perform 1-antenna-port uplink transmission on a first carrier, and the terminal device supports uplink switching performed in at least three frequency bands.

The terminal device determines, based on a first RRC parameter and/or indication signaling in at least three radio frequency chain states supporting the uplink transmission, a radio frequency chain state that is after the uplink switching.

The terminal device sends the uplink transmission in the radio frequency chain state that is after the uplink switching.

In this technical solution, when the terminal device supports the uplink switching (in other words, radio frequency chain switching) performed in the at least three frequency bands, if there are a plurality of radio frequency chain states supporting the terminal device in performing uplink transmission once, a network device indicates, by configuring the first RRC parameter and/or the indication signaling, one of the plurality of radio frequency chain states to be used as a radio frequency chain state that is of the terminal device and that is during current uplink transmission. In this way, the terminal device may determine, based on the first RRC parameter and/or the indication signaling in a plurality of possible radio frequency chain states supporting the uplink transmission, one radio frequency chain state as the radio frequency chain state that is of the terminal device and that is during the uplink transmission.

With reference to the first aspect, in some implementations of the first aspect, the terminal device is configured to perform uplink switching on at least three carriers, and the at least three carriers belong to three frequency bands; and
if a radio frequency chain state during last uplink transmission is a first state or a second state, where the first state is that there are two radio frequency chains on a second carrier, and the second state is that there is one radio frequency chain on each of the second carrier and a third carri er,
the terminal device determines, based on a first RRC parameter and/or indication signaling in at least three radio frequency chain states supporting the uplink transmission, a radio frequency chain state that is after the uplink switching in the following plurality of implementations.

Optionally, the terminal device determines, based on the first RRC parameter and first indication signaling in the at least three radio frequency chain states supporting the uplink transmission, the state that is after the uplink switching, where
when the first RRC parameter has a first value, the radio frequency chain state after the uplink switching is a first radio frequency chain state; when the first RRC parameter has a second value, and the first indication signaling has a first value, the radio frequency chain state after the uplink switching is a second radio frequency chain state; or when the first RRC parameter has a second value, and the first indication signaling has a second value, the radio frequency chain state after the uplink switching is a third radio frequency chain state.

In this implementation, an existing RRC parameter may be fully reused to indicate the radio frequency chain state, to reduce signaling overheads.

Optionally, the terminal device determines, based on second indication signaling in the at least three radio frequency chain states supporting the uplink transmission, the state that is after the uplink switching, where
the second indication signaling has at least three values, and a first value, a second value, and a third value in the at least three values respectively correspond to a first radio frequency chain state, a second radio frequency chain state, and a third radio frequency chain state.

In this implementation, new indication signaling is additionally introduced to indicate the radio frequency chain state, so that scheduling flexibility is high.

Optionally, the terminal device determines, based on the first RRC parameter in the at least three radio frequency chain states supporting the uplink transmission, the state that is after the uplink switching, where
the first RRC parameter has at least three values, and a first value, a second value, and a third value in the at least three values respectively correspond to a first radio frequency chain state, a second radio frequency chain state, and a third radio frequency chain state.

In this implementation, an existing RRC parameter may be extended, and an extended RRC parameter indicates the radio frequency chain state, so that implementation complexity of the terminal device can be reduced, and signaling overheads are small.

In the foregoing implementations, the first radio frequency chain state, the second radio frequency chain state, and the third radio frequency chain state all support the 1-antenna-port uplink transmission to be performed on the first carrier.

With reference to the first aspect, in some implementations of the first aspect, the terminal device is configured to perform uplink switching on at least four carriers, and the at least four carriers belong to four frequency bands; and
if a radio frequency chain state during last uplink transmission is a first state or a second state, where the first state is that there are two radio frequency chains on a second carrier, and the second state is that there is one radio frequency chain on each of the second carrier and a third carri er,
the terminal device determines, based on a first RRC parameter and/or indication signaling in at least three radio frequency chain states supporting the uplink transmission, a radio frequency chain state that is after the uplink switching in the following plurality of implementations.

Optionally, the terminal device determines, based on the first RRC parameter and third indication signaling in the at least three radio frequency chain states supporting the uplink transmission, the radio frequency chain state that is after the uplink switching, where
when the first RRC parameter has a first value, and the third indication signaling has a first value, the radio frequency chain state after the uplink switching is a first radio frequency chain state; when the first RRC parameter has a first value, and the third indication signaling has a second value, the radio frequency chain state after the uplink switching is a second radio frequency chain state;
when the first RRC parameter has a second value, and the third indication signaling has a first value, the radio frequency chain state after the uplink switching is a third radio frequency chain state; or when the first RRC parameter has a second value, and the third indication signaling has a second value, the radio frequency chain state after the uplink switching is a fourth radio frequency chain state.

In this implementation, when an existing RRC parameter is reused, additional indication signaling is introduced to indicate the radio frequency chain state, so that signaling overheads can be reduced. Optionally, when the first RRC parameter has a first value, the radio frequency chain state after the uplink switching is a first radio frequency chain state; when the first RRC parameter has a second value, and the third indication signaling has a first value, the radio frequency chain state after the uplink switching is a second radio frequency chain state; when the first RRC parameter has a second value, and the third indication signaling has a second value, the radio frequency chain state after the uplink switching is a third radio frequency chain state; or when the first RRC parameter has a second value, and the third indication signaling has a third value, the radio frequency chain state after the uplink switching is a fourth radio frequency chain state.

In this implementation, when an existing RRC parameter is reused, additional indication signaling is introduced to indicate the radio frequency chain state, so that signaling overheads can be reduced. Optionally, the terminal device determines, based on fourth indication signaling in the at least three radio frequency chain states supporting the uplink transmission, the radio frequency chain state that is after the uplink switching, where
the fourth indication signaling has at least four values, and a first value, a second value, a third value, and a fourth value in the at least four values respectively correspond to a first radio frequency chain state, a second radio frequency chain state, a third radio frequency chain state, and a fourth radio frequency chain state.

In this implementation, additional indication signaling is introduced to indicate the radio frequency chain state, so that scheduling flexibility is high.

Optionally, the terminal device determines, based on the first RRC parameter in the at least three radio frequency chain states supporting the uplink transmission, the radio frequency chain state that is after the uplink switching, where
the first RRC parameter has at least four values, and a first value, a second value, a third value, and a fourth value in the at least four values respectively correspond to a first radio frequency chain state, a second radio frequency chain state, a third radio frequency chain state, and a fourth radio frequency chain state.

In this implementation, an existing RRC parameter may be extended, and an extended RRC parameter indicates the radio frequency chain state, so that implementation complexity of the terminal device can be reduced, and signaling overheads are small.

In the foregoing implementations, the first radio frequency chain state, the second radio frequency chain state, the third radio frequency chain state, and the fourth radio frequency chain state all support the 1-antenna-port uplink transmission to be performed on the first carrier.

According to a second aspect, an uplink transmission method is provided. The method includes: A terminal device receives first information, where the first information indicates the terminal device to perform 1-antenna-port uplink transmission on a first carrier, and the terminal device supports uplink switching performed in at least three frequency bands.

The terminal device determines, based on a combination of supported carriers for parallel sending and/or according to a predefined selection policy in at least two radio frequency chain states supporting the uplink transmission, a radio frequency chain state that is after the uplink switching, where
the predefined selection policy includes one or more of the following: a quantity of carriers involved in the uplink switching is smallest, the uplink switching does not involve a carrier on which there is no uplink transmission, the uplink switching does not involve a carrier on which there is no radio frequency chain, or switching time of the uplink switching satisfies a preset condition.

The terminal device sends the uplink transmission in the radio frequency chain state that is after the uplink switching.

In this technical solution, the terminal device determines, based on the combination of the supported carriers for the parallel sending and/or according to the predefined selection policy in the at least two radio frequency chain states supporting the uplink transmission, the radio frequency chain state that is after the uplink switching, so that signaling overheads caused when a network side configures an RRC parameter and/or indication signaling to indicate the radio frequency chain state can be reduced.

With reference to the second aspect, in some implementations of the second aspect, that the terminal device determines, based on a combination of supported carriers for parallel sending and/or according to a predefined selection policy in at least two radio frequency chain states supporting the uplink transmission, a radio frequency chain state that is after the uplink switching includes:
When two or more radio frequency chain states are determined, based on the combination of the carriers that are supported by the terminal device and that are for the parallel sending and/or according to the predefined selection policy, in the at least two radio frequency chain states supporting the uplink transmission, the terminal device further determines, based on a second RRC parameter and/or fifth indication signaling in the two or more radio frequency chain states, the radio frequency chain state that is after the uplink switching.

In this implementation, the terminal device preferentially determines, based on the combination of the supported carriers for the parallel sending and/or according to the predefined selection policy in the at least two radio frequency chain states supporting the uplink transmission, the radio frequency chain state that is after the uplink switching. After a part of Tx states are excluded based on the combination of the supported carriers that may be for the parallel sending and/or according to the predefined selection policy, if there are still two or more remaining Tx states, the RRC parameter and/or the indication signaling indicate/indicates one of the at least two remaining Tx states, so that signaling overheads can be reduced.

With reference to the second aspect, in some implementations of the second aspect, the fifth indication signaling indicates a carrier or a frequency band that needs to be preferentially switched in the uplink switching.

With reference to the second aspect, in some implementations of the second aspect, the preset condition includes that the switching time of the uplink switching is shortest or that the switching time of the uplink switching is less than or equal to a specified threshold.

According to a third aspect, an uplink transmission method is provided. The method includes:
A network device sends first information, where the first information indicates a terminal device to perform 1-antenna-port uplink transmission on a first carrier, and the terminal device supports uplink switching performed in at least three frequency bands.

The network device sends a first RRC parameter and/or indication signaling to the terminal device, where the first RRC parameter and/or the indication signaling are/is used by the terminal device to determine, in at least three radio frequency chain states supporting the uplink transmission, a radio frequency chain state that is after the uplink switching.

The network device receives the uplink transmission sent by the terminal device in the radio frequency chain state that is after the uplink switching.

With reference to the third aspect, in some implementations of the third aspect, the terminal device is configured to perform uplink switching on at least three carriers, and the at least three carriers belong to three frequency bands; and
The network device sends the first RRC parameter and/or the indication signaling to the terminal device in the following plurality of implementations, where the first RRC parameter and/or the indication signaling are/is used by the terminal device to determine, in the at least three radio frequency chain states supporting the uplink transmission, the radio frequency chain state that is after the uplink switching.

Optionally, the network device sends the first RRC parameter and first indication signaling to the terminal device, where the first RRC parameter and the first indication signaling are used by the terminal device to determine, in the at least three radio frequency chain states supporting the uplink transmission, the radio frequency chain state that is after the uplink switching, where
when the first RRC parameter has a first value, the radio frequency chain state after the uplink switching is a first radio frequency chain state; when the first RRC parameter has a second value, and the first indication signaling has a first value, the radio frequency chain state after the uplink switching is a second radio frequency chain state; or when the first RRC parameter has a second value, and the first indication signaling has a second value, the radio frequency chain state after the uplink switching is a third radio frequency chain state.

Optionally, the network device sends second indication signaling to the terminal device, where the second indication signaling is used by the terminal device to determine, in the at least three radio frequency chain states supporting the uplink transmission, the radio frequency chain state that is after the uplink switching, where
the second indication signaling has at least three values, and a first value, a second value, and a third value in the at least three values respectively correspond to a first radio frequency chain state, a second radio frequency chain state, and a third radio frequency chain state.

Optionally, the network device sends the first RRC parameter to the terminal device, where the first RRC parameter is used by the terminal device to determine, in the at least three radio frequency chain states supporting the uplink transmission, the radio frequency chain state that is after the uplink switching, where
the first RRC parameter has at least three values, and a first value, a second value, and a third value in the at least three values respectively correspond to a first radio frequency chain state, a second radio frequency chain state, and a third radio frequency chain state.

In the foregoing implementations, the first radio frequency chain state, the second radio frequency chain state, and the third radio frequency chain state all support the 1-antenna-port uplink transmission to be performed on the first carrier.

With reference to the third aspect, in some implementations of the third aspect, the terminal device is configured to perform uplink switching on at least four carriers, and the at least four carriers belong to four frequency bands; and
The network device sends the first RRC parameter and/or the indication signaling to the terminal device in the following plurality of implementations, where the first RRC parameter and/or the indication signaling are/is used by the terminal device to determine, in the at least three radio frequency chain states supporting the uplink transmission, the radio frequency chain state that is after the uplink switching.

Optionally, the network device sends the first RRC parameter and third indication signaling to the terminal device, where the first RRC parameter and the third indication signaling are used by the terminal device to determine, in the at least three radio frequency chain states supporting the uplink transmission, the radio frequency chain state that is after the uplink switching, where
when the first RRC parameter has a first value, and the third indication signaling has a first value, the radio frequency chain state after the uplink switching is a first radio frequency chain state; when the first RRC parameter has a first value, and the third indication signaling has a second value, the radio frequency chain state after the uplink switching is a second radio frequency chain state; when the first RRC parameter has a second value, and the third indication signaling has a first value, the radio frequency chain state after the uplink switching is a third radio frequency chain state; or when the first RRC parameter has a second value, and the third indication signaling has a second value, the radio frequency chain state after the uplink switching is a fourth radio frequency chain state; or
when the first RRC parameter has a first value, the radio frequency chain state after the uplink switching is a first radio frequency chain state; when the first RRC parameter has a second value, and the third indication signaling has a first value, the radio frequency chain state after the uplink switching is a second radio frequency chain state; when the first RRC parameter has a second value, and the third indication signaling has a second value, the radio frequency chain state after the uplink switching is a third radio frequency chain state; or when the first RRC parameter has a second value, and the third indication signaling has a third value, the radio frequency chain state after the uplink switching is a fourth radio frequency chain state.

Optionally, the network device sends fourth indication signaling to the terminal device, where the fourth indication signaling is used by the terminal device to determine, in the at least three radio frequency chain states supporting the uplink transmission, the radio frequency chain state that is after the uplink switching, where
the fourth indication signaling has at least four values, and a first value, a second value, a third value, and a fourth value in the at least four values respectively correspond to a first radio frequency chain state, a second radio frequency chain state, a third radio frequency chain state, and a fourth radio frequency chain state.

Optionally, the network device sends the first RRC parameter to the terminal device, where the first RRC parameter has at least four values, and a first value, a second value, a third value, and a fourth value in the at least four values respectively correspond to a first radio frequency chain state, a second radio frequency chain state, a third radio frequency chain state, and a fourth radio frequency chain state.

In the foregoing implementations, the first radio frequency chain state, the second radio frequency chain state, the third radio frequency chain state, and the fourth radio frequency chain state all support the 1-antenna-port uplink transmission to be performed on the first carrier.

For beneficial technical effects of the third aspect or the possible implementations of the third aspect, refer to the technical effects of the first aspect or the corresponding implementations of the first aspect. Details are not described again.

According to a fourth aspect, an uplink transmission method is provided. The method includes: A network device sends first information, where the first information indicates a terminal device to perform 1-antenna-port uplink transmission on a first carrier, and the terminal device supports uplink switching performed in at least three frequency bands.

The network device determines, based on a combination of carriers that are supported by the terminal device and that are for parallel sending and/or according to a predefined selection policy, a radio frequency chain state that is of the terminal device and that is during the uplink transmission, where the radio frequency chain state during the uplink transmission is a radio frequency chain state that is after the uplink switching, where
the predefined selection policy includes one or more of the following: a quantity of carriers involved in the uplink switching is smallest, the uplink switching does not involve a carrier on which there is no uplink transmission, the uplink switching does not involve a carrier on which there is no radio frequency chain, or switching time of the uplink switching satisfies a preset condition.

The network device receives the uplink transmission sent by the terminal device in the radio frequency chain state that is after the uplink switching.

Optionally, in some implementations of the fourth aspect, the method further includes:
When two or more radio frequency chain states that are of the terminal device and that are during the uplink transmission are determined by the network device based on the combination of the carriers that are supported by the terminal device and that are for the parallel sending and/or according to the predefined selection policy, the network device sends a second RRC parameter and/or fifth indication signaling to the terminal device, where
the second RRC parameter and/or the fifth indication signaling indicate/indicates one of the two or more radio frequency chain states to be used as the radio frequency chain state that is of the terminal device and that is during the uplink transmission.

Optionally, in some implementations of the fourth aspect, the fifth indication signaling indicates a carrier or a frequency band that needs to be preferentially switched in the uplink switching. Optionally, in some implementations of the fourth aspect, the preset condition includes that the switching time of the uplink switching is shortest or that the switching time of the uplink switching is less than or equal to a specified threshold.

For beneficial technical effects of the fourth aspect or the possible implementations of the fourth aspect, refer to the technical effects of the second aspect or the corresponding implementations of the second aspect. Details are not described again.

According to a fifth aspect, a communication apparatus is provided. The communication apparatus has functions of implementing the method according to any one of the first aspect, the second aspect, or the possible implementations of these aspects. The functions may be implemented by using hardware, or may be implemented by hardware executing corresponding software. The hardware or the software includes one or more units corresponding to the foregoing functions. According to a sixth aspect, a communication apparatus is provided. The communication apparatus has functions of implementing the method according to any one of the third aspect, the fourth aspect, or the possible implementations of these aspects. The functions may be implemented by using hardware, or may be implemented by hardware executing corresponding software. The hardware or the software includes one or more units corresponding to the foregoing functions. According to a seventh aspect, a communication apparatus is provided, and includes a processor and a memory. Optionally, the communication apparatus may further include a transceiver. The memory is configured to store a computer program. The processor is configured to: invoke and run the computer program stored in the memory, and control the transceiver to receive and send a signal, to enable the communication apparatus to perform the method according to any one of the first aspect, the second aspect, or the possible implementations of these aspects.

According to an eighth aspect, a communication apparatus is provided, and includes a processor and a memory. Optionally, the communication apparatus may further include a transceiver. The memory is configured to store a computer program. The processor is configured to: invoke and run the computer program stored in the memory, and control the transceiver to receive and send a signal, to enable the communication apparatus to perform the method according to any one of the third aspect, the fourth aspect, or the possible implementations of these aspects.

According to a ninth aspect, a communication apparatus is provided, and includes a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, so that the method according to any one of the first aspect, the second aspect, or the possible implementations of these aspects is performed.

According to a tenth aspect, a communication apparatus is provided, and includes a processor and a communication interface. The communication interface is configured to: receive (in other words, input) data and/or information, and transmit the received data and/or information to the processor. The processor processes the data and/or information. In addition, the communication interface is further configured to output data and/or information that are/is obtained through processing by the processor, so that the method according to any one of the third aspect, the fourth aspect, or the possible implementations of these aspects is performed.

According to an eleventh aspect, a computer-readable storage medium is provided. The computer-readable storage medium stores computer instructions. When the computer instructions are run on a computer, the method according to any one of the first aspect, the second aspect, or the possible implementations of these aspects is enabled to be performed.

According to a twelfth aspect, a computer-readable storage medium is provided. The computer-readable storage medium stores computer instructions. When the computer instructions are run on a computer, the method according to any one of the third aspect, the fourth aspect, or the possible implementations of these aspects is enabled to be performed.

According to a thirteenth aspect, a computer program product is provided. The computer program product includes computer program code. When the computer program code is run on a computer, the method according to any one of the first aspect, the second aspect, or the possible implementations of these aspects is enabled to be performed.

According to a fourteenth aspect, a computer program product is provided. The computer program product includes computer program code. When the computer program code is run on a computer, the method according to any one of the third aspect, the fourth aspect, or the possible implementations of these aspects is enabled to be performed.

According to a fifteenth aspect, a wireless communication system is provided, and includes the communication apparatus according to the fifth aspect and/or the communication apparatus according to the sixth aspect.

### BRIEF DESCRIPTION OF DRAWINGS

FIG. 1 is a diagram in which UE cannot determine a radio frequency chain state that is during current uplink transmission;
FIG. 2 to FIG. 4 show some examples of a system architecture applicable to this application;
FIG. 5 shows an example in which UE cannot determine a radio frequency chain state;
FIG. 6 shows another example in which UE cannot determine a radio frequency chain state;
FIG. 7 and FIG. 8 show some other examples of a system architecture applicable to this application;
FIG. 9 shows an example in which UE cannot determine a radio frequency chain state;
FIG. 10 shows another example in which UE cannot determine a radio frequency chain state;
FIG. 11 shows an example of an uplink transmission method according to this application;
FIG. 12 shows another example of an uplink transmission method according to this application;
FIG. 13 shows an example of excluding a part of Tx states based on a combination of supported frequency bands for parallel sending;
FIG. 14 shows another example of excluding a part of Tx states based on a combination of supported frequency bands for parallel sending;
FIG. 15 to FIG. 20 show some examples of excluding a part of Tx states based on a combination of supported frequency bands for parallel sending;
FIG. 21 is a schematic block diagram of a communication apparatus according to this application; and
FIG. 22 is a diagram of a structure of a communication apparatus according to this application.

### DESCRIPTION OF EMBODIMENTS

The following describes technical solutions in embodiments in this application with reference to accompanying drawings.

The technical solutions in embodiments of this application may be applied to various communication systems, including but not limited to a 5th generation (5th generation, 5G) system, a new radio (new radio, NR) system, a long term evolution (long term evolution, LTE) system, an LTE frequency division duplex (frequency division duplex, FDD) system, an LTE time division duplex (time division duplex, TDD) system, and the like. The technical solutions provided in this application may be further applied to a future communication system, for example, a 6th generation mobile communication system, and may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system or another communication system, and the like.

The communication system used in this application may include one or more transmitting ends and one or more receiving ends. Optionally, one of the transmitting end and the receiving end may be a terminal device, and the other may be a network device. Alternatively, both are terminal devices.

For example, the terminal device may also be referred to as user equipment (user equipment, UE), an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device in embodiments of this application may be a device that provides voice and/or data connectivity for a user, and may be configured to connect a person, an object, and a machine, for example, a handheld device or a vehicle-mounted device with a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, the UE may be configured to serve as a base station. For example, the UE may serve as a scheduling entity that provides a sidelink signal between UE in V2X, D2D, or the like.

In embodiments of this application, an apparatus configured to implement a function of the terminal may be a terminal device, or may be an apparatus, for example, a chip system or a chip, that can support the terminal device in implementing the function. The apparatus may be installed in the terminal device. In embodiments of this application, the chip system may consist of a chip, or may include the chip and another discrete component.

For example, the network device may be a device having a wireless transceiver function. The network device may be a device that provides a wireless communication function service, is usually located on a network side, and includes but is not limited to a next-generation NodeB (gNodeB, gNB) in the 5th generation (5th generation, 5G) communication system, a base station in the 6th generation (6th generation, 6G) mobile communication system, a base station in the future mobile communication system, an access node or the like in a wireless fidelity (wireless fidelity, Wi-Fi) system, an evolved NodeB (evolved NodeB, eNB) in the long term evolution (long term evolution, LTE) system, a radio network controller (radio network controller, RNC), a NodeB (NodeB, NB), a base station controller (base station controller, BSC), a home base station (for example, a home evolved NodeB, or a home NodeB, HNB), a base band unit (base band unit, BBU), a transmission reception point (transmission reception point, TRP), a transmitting point (transmitting point, TP), a base transceiver station (base transceiver station, BTS), or the like. In a network structure, the network device may include a central unit (central unit, CU) node, a distributed unit (distributed unit, DU) node, a RAN device including the CU node and the DU node, or a RAN device including a CU-control plane node, a CU-user plane node, and a DU node. Alternatively, the network device may be a radio controller, a relay station, a vehicle-mounted device, a wearable device, and the like in a cloud radio access network (cloud radio access network, CRAN) scenario. In addition, the base station may be a macro base station, a micro base station, a relay node, a donor node, or a combination thereof. The base station may alternatively be a communication module, a modem, or a chip that is configured to be disposed in the foregoing device or apparatus. The base station may alternatively be a mobile switching center, a device that bears a base station function in the D2D, V2X, and M2M communication, a network side device in a 6G network, a device that bears a base station function in the future communication system, or the like. The base station may support networks of a same access technology or different access technologies. This is not limited.

In embodiments of this application, an apparatus configured to implement a function of the network device may be the network device, or may be an apparatus, for example, a chip system or a chip, that can support the network device in implementing the corresponding function. The apparatus may be installed in the network device. In embodiments of this application, the chip system may consist of a chip, or may include the chip and another discrete component.

To facilitate understanding of the technical solutions in this application, concepts or technologies in this application are first briefly described.

A transmit channel (transmitter, Tx) is a physical concept, and may also be referred to as a radio frequency (radio frequency, RF) transmit channel that is referred to as the transmit channel for short in this application. In this application, the transmit channel may work in, but not limited to, the following manner: The transmit channel may receive a baseband signal from a baseband chip, perform radio frequency processing (for example, up-conversion, amplification, and filtering) on the baseband signal to obtain a radio frequency signal, and finally radiate the radio frequency signal to space through an antenna. Specifically, the transmit channel may include electronic components such as an antenna switch, an antenna tuner, a low noise amplifier (low noise amplifier, LNA), a power amplifier (power amplifier, PA), a mixer (mixer), a local oscillator (local oscillator, LO), and a filter (filter). These electronic components may be integrated into one or more chips based on a requirement. The antenna may also be sometimes considered as a part of the transmit channel.

Alternatively, in this application, the transmit channel is also referred to as a radio frequency chain. Optionally, the radio frequency chain in this application may alternatively be replaced with the Tx, the antenna, a radio frequency, the transmit channel, a sending port, a receive channel, or any combination thereof.

A new uplink mode is proposed in Release 16. If UE supports two uplink carriers, the UE may perform radio frequency chain switching on the two carriers, to improve radio frequency chain utilization.

For UE that supports two radio frequency chains on two uplink carriers and that supports switching of the radio frequency chains on the two carriers, sending behavior of the UE on the two uplink carriers is defined in Table 1 below.

**Table 1**

| | Number of Tx chains in WID (carrier 1+carrier 2) |
|---|---|
| Case 1 | 1T+1T |
| Case 2 | 0T+2T |

The carrier 1 and the carrier 2 represent the two uplink carriers, and the Tx represents the radio frequency chain. In Table 1, the case 1 indicates that the UE has one radio frequency chain on the carrier 1, and has one radio frequency chain on the carrier 2; and the case 2 indicates that the UE has no radio frequency chain on the carrier 1, and has two radio frequency chains on the carrier 2. It can be learned that the UE supports a maximum of one radio frequency chain on the carrier 1, and supports a maximum of two radio frequency chains on the carrier 2. The UE may perform switching between the two cases, that is, may switch one radio frequency chain between the two carriers. The switching between the two cases needs switching time. The switching time may be referred to as an uplink switching gap. During the uplink switching gap, the UE does not expect to perform transmission on either of the two carriers. Duration for which the UE performs uplink switching is reported via a UE capability. Values may be 35 µs, 140 µs, and 210 µs.

Release 17 is an enhancement of Release 16.

In an aspect, an enhancement in a quantity of Txs is exhibited. To be specific, a total quantity of Txs configured for the UE does not change, but a maximum quantity of Txs supported by the UE on the carrier 1 changes from 1Tx to 2Tx. This is equivalent to adding a case 3 based on Table 1, as shown in Table 2. Therefore, the Tx switching in R16 may be regarded as 1Tx-2Tx switching, and Tx switching in R17 may be regarded as 2Tx-2Tx switching. Only one Tx needs to be switched in R16, and two Txs are switched in R17. Therefore, R16 switching time and R17 switching time that are reported by same UE to a base station may be different.

In another aspect, an enhancement in a quantity of carriers is exhibited. To be specific, in R16, switching is performed on only the two carriers, but in R17, the UE is allowed to perform switching on three carriers on two frequency bands (which may also be referred to as bands below). For example, the three carriers are a carrier 1, a carrier 2, and a carrier 3, where the carrier 1 belongs to a frequency band A, and the carrier 2 and the carrier 3 are two consecutive carriers in a frequency band B. The carrier 2 and the carrier 3 may share a same radio frequency chain. To be specific, if there is one Tx in the frequency band B, the Tx is available on both of the two carriers in the frequency band B. If there are two Txs in the frequency band B, the two Txs are available on both of the two carriers in the frequency band B. It should be noted that the two carriers in R16 belong to two different frequency bands.

**Table 2**

| | Number of Tx chains in WID (carrier 1+carrier 2) |
|---|---|
| Case 1 | 1T+1T |
| Case 2 | 0T+2T |
| Case 3 | 2T+0T |

For R16, an existing protocol does not directly indicate the UE to perform radio frequency chain switching on the carriers, but indirectly indicates, via a quantity of ports to be used by the UE to send uplink transmission on a carrier, the UE to perform radio frequency chain switching, and further determines whether radio frequency chain switching needs to be performed for current uplink transmission, that is, whether there is switching time. An indirect indication manner is used based on a mapping relationship between the radio frequency chains and the antenna ports for the uplink transmission. Table 3 shows a mapping relationship between radio frequency chains of UE that supports the 1Tx-2Tx switching and that supports switchedUL for uplink carrier aggregation and the antenna ports for the uplink transmission.

**Table 3**

| | Number of Tx chains in WID (carrier 1+carrier 2) | Number of antenna ports for UL transmission (carrier 1+carrier 2) |
|---|---|---|
| Case 1 | 1T+1T | 1P+0P |
| Case 2 | 0T+2T | 0P+2P or 0P+1P |

It can be learned from Table 3 that, in the case 1, that is, when there is one radio frequency chain on the carrier 1, and there is one radio frequency chain on the carrier 2, the UE may send 1-port uplink transmission on the carrier 1, and there is no uplink transmission on the carrier 2, that is, 1P+0P. In the case 2, that is, when there is no radio frequency chain on the carrier 1, and there are two radio frequency chains on the carrier 2, the UE may send 2-port uplink transmission on the carrier 2, and there is no uplink transmission on the carrier 1, that is, 0P+2P; or the UE may send 1-port uplink transmission on the carrier 2, and there is no uplink transmission on the carrier 1, that is, 0P+1P. In the protocol, whether the switching time is needed is determined based on a status of a port for uplink transmission to be sent by the UE on the two carriers and a status of a port for last uplink transmission.

For example, 1-port uplink transmission is to be performed on the carrier 2, and the last uplink transmission is the 1-port uplink transmission performed on the carrier 1. That is, switching is performed from 1P+0P in the case 1 to 0P+1P in the case 2. In this case, the UE needs to perform radio frequency chain switching.

Table 4 shows a mapping relationship between radio frequency chains of UE supporting dualUL for uplink carrier aggregation and the antenna ports for the uplink transmission.

**Table 4**

| | Number of Tx chains in WID (carrier 1+carrier 2) | Number of antenna ports for UL transmission (carrier 1+carrier 2) |
|---|---|---|
| Case 1 | 1T+1T | 1P+0P, 1P+1P, or 0P+1P |
| Case 2 | 0T+2T | 0P+2P or 0P+1P |

It can be learned from Table 4 that, in the case 1, that is, when there is one radio frequency chain on the carrier 1, and there is one radio frequency chain on the carrier 2, the UE may send 1-port uplink transmission on the carrier 1, and there is no uplink transmission on the carrier 2 (that is, 1P+0P); the UE may send 1-port uplink transmission on the carrier 1, and send 1-port uplink transmission on the carrier 2 (that is, 1P+1P); or the UE may send 1-port uplink transmission on the carrier 2, and there is no uplink transmission on the carrier 1 (that is, 0P+1P). In the case 2, that is, when there is no radio frequency chain on the carrier 1, and there are two radio frequency chains on the carrier 2, the UE may send 2-port uplink transmission on the carrier 2, and there is no uplink transmission on the carrier 1 (that is, 0P+2P); or the UE may send 1-port uplink transmission on the carrier 2, and there is no uplink transmission on the carrier 1 (that is, 0P+1P). In the protocol, whether the switching time is needed is determined based on a status of a port for uplink transmission to be sent by the UE on the two carriers, a status of a port for last uplink transmission, and a status of a port that is supported by the UE and that is for uplink transmission. In addition, when the following two conditions are satisfied, there is switching time for both the UE supporting switchedUL and the UE supporting dualUL:

For example, 2-port transmission is to be sent on one carrier, and previous uplink transmission on the other carrier is 1-port uplink transmission (1P+0P in the case 1 is switched to 0P+2P in the case 2). In this case, the UE needs to perform radio frequency chain switching, and does not expect, during the uplink switching gap, to perform transmission on either of the two carriers.

For example, 1-port transmission is to be sent on one carrier, and previous uplink transmission on the other carrier is 2-port uplink transmission (0P+2P in the case 2 is switched to 1P+0P in the case 1). In this case, the UE needs to perform radio frequency chain switching, and does not expect, during the uplink switching gap, to perform transmission on either of the two carriers.

In addition, if the UE does not perform uplink transmission, a radio frequency chain state of the UE is a radio frequency chain state that is during the last uplink transmission. That is, the radio frequency chain state of the UE does not change.

In addition, uplink sending through different ports in a same case does not need to be switched. Therefore, the switching time is not needed.

For R17, an existing protocol does not directly indicate the UE to perform radio frequency chain switching on the carriers either, but indirectly indicates, via a quantity of ports to be used by the UE to send uplink transmission on a carrier, the UE to perform radio frequency chain switching, and further determines whether radio frequency chain switching needs to be performed for current uplink transmission, that is, whether there is switching time.

Table 5 shows a mapping relationship between radio frequency chains of UE that supports the 2Tx-2Tx switching and that supports switchedUL for uplink carrier aggregation and the antenna ports for the uplink transmission.

**Table 5**

| | Number of Tx chains in WID (carrier 1+carrier 2) | Number of antenna ports for UL transmission (carrier 1+carrier 2) |
|---|---|---|
| Case 2 | 0T+2T | 0P+2P or 0P+1P |
| Case 3 | 2T+0T | 2P+0P or 1P+0P |

It can be learned from Table 5 that, in the case 2, that is, when there is no radio frequency chain on the carrier 1, and there are two radio frequency chains on the carrier 2, the UE may send 2-port uplink transmission on the carrier 2, and there is no uplink transmission on the carrier 1 (0P+2P); or the UE may send 1-port uplink transmission on the carrier 2, and there is no uplink transmission on the carrier 1 (0P+1P). In the case 3, that is, there are two radio frequency chains on the carrier 1, and there is no radio frequency chain on the carrier 2, the UE may send 2-port uplink transmission on the carrier 1, and there is no uplink transmission on the carrier 2 (2P+0P); or the UE may 1-port uplink transmission on the carrier 1, and there is no uplink transmission on the carrier 2 (1P+0P).

In the protocol, whether the switching time is needed is determined based on a status of a port for uplink transmission to be sent by the UE on the two carriers and a status of a port for last uplink transmission. Alternatively, if a carrier for the last transmission is different from a carrier for the current transmission, the switching time is needed.

For example, 2-port transmission is to be sent on one carrier, and previous uplink transmission on the other carrier is 2-port uplink transmission (2P+0P in the case 3 is switched to 0P+2P in the case 2). In this case, the UE needs to perform radio frequency chain switching, and does not expect, during the uplink switching gap, to perform transmission on either of the two carriers.

Table 6 shows a mapping relationship between radio frequency chains of UE that supports the 2Tx-2Tx switching and that supports dualUL for uplink carrier aggregation and the antenna ports for the uplink transmission.

**Table 6**

| | Number of Tx chains in WID (carrier 1+carrier 2) | Number of antenna ports for UL transmission (carrier 1+carrier 2) |
|---|---|---|
| Case 1 | 1T+1T | 1P+0P, 1P+1P, or 0P+1P |
| Case 2 | 0T+2T | 0P+2P or 0P+1P |
| Case 3 | 2T+0T | 2P+0P or 1P+0P |

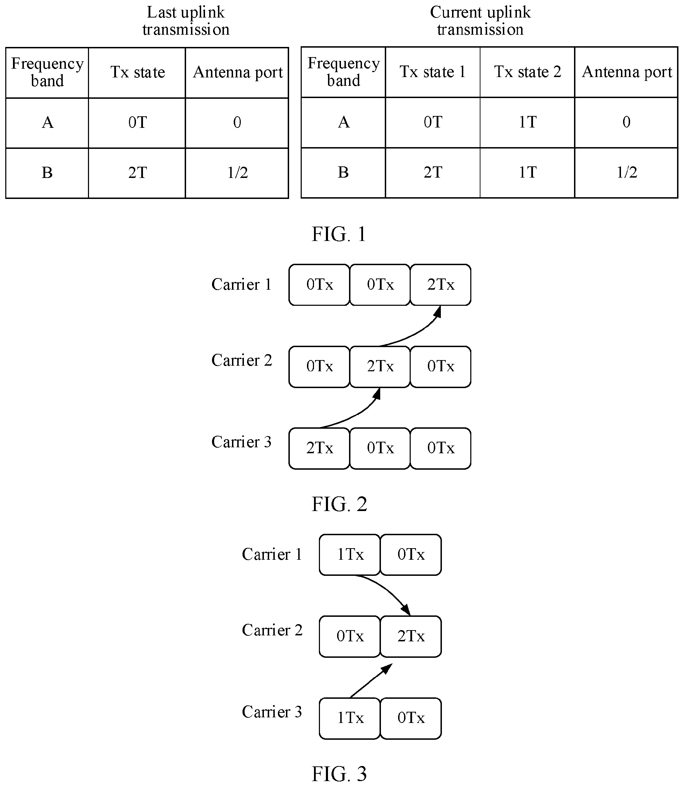

However, for the 2Tx-2Tx dualUL switching, because the case 3 is added in comparison with the 1Tx-2Tx dualUL switching, a problem that the UE cannot determine, through implicit indication of a transmission port status, a quantity of radio frequencies to be used for transmission may occur. For example, if the last transmission is performed in the case 3, that is, the UE performs 2-port transmission on the carrier 1, or performs 1-port transmission on the carrier 1 but supports 2-port transmission on the carrier 1, and next transmission is 1-port transmission to be performed on the carrier 2, the UE needs the switching time. However, it can be learned from Table 6 that both the case 1 and the case 2 support 0P+1P. In this case, the UE does not determine whether to switch 1Tx to the carrier 2 or switch 2Tx to the carrier 2. That is, the UE does not determine whether to switch to the case 1 or the case 2. Similarly, if the last transmission is performed in the case 2, and next transmission is 1-port transmission on the carrier 1, such a problem also occurs. The UE does not determine whether to switch to the case 1 or the case 3, as shown in FIG. 1.

FIG. 1 is a diagram in which UE cannot determine a radio frequency chain state that is during current uplink transmission. As shown in FIG. 1, if a radio frequency chain state that is of the UE and that is during last uplink transmission is 0Tx on a carrier in a frequency band A and 2Tx on a carrier in a frequency band B, the last transmission is 1-port or 2-port uplink transmission performed only on the carrier in the frequency band B, and the current uplink transmission is 1-port uplink transmission to be performed on the carrier in the frequency band A, the UE may correspond to two radio frequency chain states such as a Tx state 1 and a Tx state 2. The Tx state 1 is that there are two radio frequency chains on the carrier in the frequency band A and that there is no radio frequency chain on the carrier in the frequency band B. The TX state 2 is that there is one radio frequency chain on each of the carrier in the frequency band A and the carrier in the frequency band B. Both the Tx state 1 and the Tx state 2 support the 1-port uplink transmission on the carrier in the frequency band A. Therefore, the UE cannot determine whether radio frequency chains should be switched from the TX state that is during the last uplink transmission to the Tx state 1 or the Tx state 2.

To resolve this problem, in a current standard, whether to use 1Tx or 2Tx for sending is determined through RRC parameter pre-configuration. That is, whether to use the Tx state 1 or the Tx state 2 is preconfigured by using an RRC parameter.

For example, the last uplink transmission is 2-port or 1-port (but 2-port uplink transmission is supported) uplink transmission performed on a carrier in a frequency band, and the current uplink transmission is no uplink transmission on the carrier in the frequency band but 1-port uplink transmission to be performed on a carrier in another frequency band, like the case shown in FIG. 1. If the RRC parameter is set to 1T, the UE has one Tx on each of the two carriers in the two frequency bands, for example, the Tx state 2; or if the RRC parameter is not set to 1T, the UE supports 2Tx on the carrier used for the current uplink transmission, for example, the Tx state 1. With evolution and development of a communication system, a future standard is intended to extend a quantity of frequency bands supporting Tx switching from two to more than two, for example, three or four, and a total quantity of Txs is still limited to two, that is, 2Tx. In this case, when the UE performs Tx switching on carriers in more than two frequency bands, a quantity of antenna ports for transmission still also indirectly indicates the Tx switching. However, from a perspective of a UE side, a Tx state supporting the switching is not unique. The UE cannot determine a status of a Tx state that is after the switching.
1. At least three carriers are configured for the UE. The UE may perform Tx switching on the at least three carriers. The total quantity of Txs is two. Optionally, the at least three carriers belong to at least three frequency bands.

FIG. 2 to FIG. 4 show some examples of a system architecture applicable to this application.

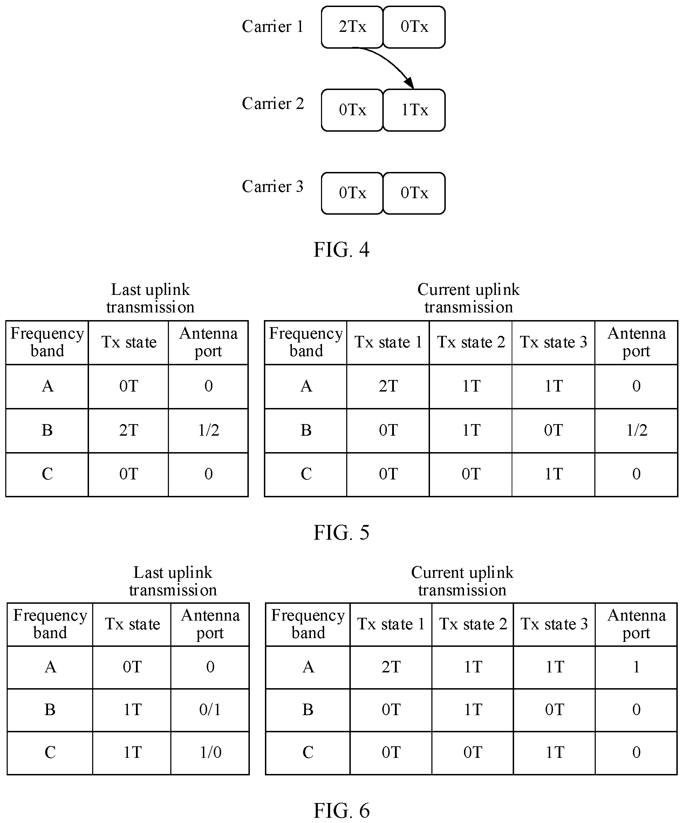

As shown in FIG. 2 to FIG. 4, at least three carriers are configured for UE. The at least three carriers belong to at least three frequency bands. The UE may perform Tx switching in the at least three frequency bands. A total quantity of Txs of the UE on the at least three carriers is two. In FIG. 2, the Tx switching involves only two carriers. In FIG. 3, the Tx switching involves three carriers. In FIG. 4, only one Tx may be switched.

FIG. 5 shows an example in which UE cannot determine a radio frequency chain state. As shown in FIG. 5, the UE may perform Tx switching on carriers in three frequency bands. If there are two Txs on a carrier in a frequency band B in last uplink transmission, that is, the last uplink transmission is 2-port transmission or 1-port transmission (2-port transmission is supported) performed on the carrier in the frequency band B, and current uplink transmission is 1-port transmission to be performed on a carrier in a frequency band A and no uplink transmission on a carrier in another frequency band, there are three possible Tx states on a UE side that are denoted as a Tx state 1 to a Tx state 3. Details are as follows.

Tx state 1: There are two Txs on the carrier in the frequency band A.

Tx state 2: There is one Tx on each of the carrier in the frequency band A and the carrier in the frequency band B.

Tx state 3: There is one Tx on each of the carrier in the frequency band A and a carrier in a frequency band C.

It can be learned that each of the Tx state 1 to the Tx state 3 supports 1-port transmission on the carrier in the frequency band A.

FIG. 6 shows another example in which UE cannot determine a radio frequency chain state. As shown in FIG. 6, the UE may perform Tx switching on carriers in three frequency bands. If there is one Tx on each of a carrier in a frequency band B and a carrier in a frequency band C in last uplink transmission, that is, the last uplink transmission is 1-port transmission performed on the carrier in the frequency band B, 1-port transmission performed on the carrier in the frequency band C, or 1-port transmission performed on both the carrier in the frequency band B and the carrier in the frequency band C, and current uplink transmission is 1-port transmission to be performed on a carrier in a frequency band A and no uplink transmission on a carrier in another frequency band, there are still three possible Tx states on a UE side that are a Tx state 1 to a Tx state 3.

2. At least four carriers are configured for the UE. The UE may perform Tx switching on the at least four carriers. The total quantity of Txs is two. Optionally, the at least four carriers belong to at least four frequency bands.

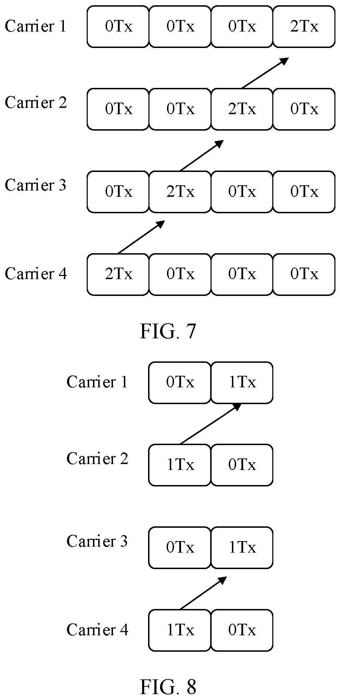

FIG. 7 and FIG. 8 each show another example of a system architecture applicable to this application.

As shown in FIG. 7 and FIG. 8, at least four carriers are configured for UE. The at least four carriers belong to at least four frequency bands. The UE may perform Tx switching on the at least four carriers. A total quantity of Txs of the UE on the at least four carriers is two.

In FIG. 7, each time of Tx switching involves two carriers, and two Txs need to be switched. In FIG. 8, each time of Tx switching involves four carriers. For example, 1Tx on a carrier 4 is switched to a carrier 3, and 1Tx on a carrier 2 is switched to a carrier 1.

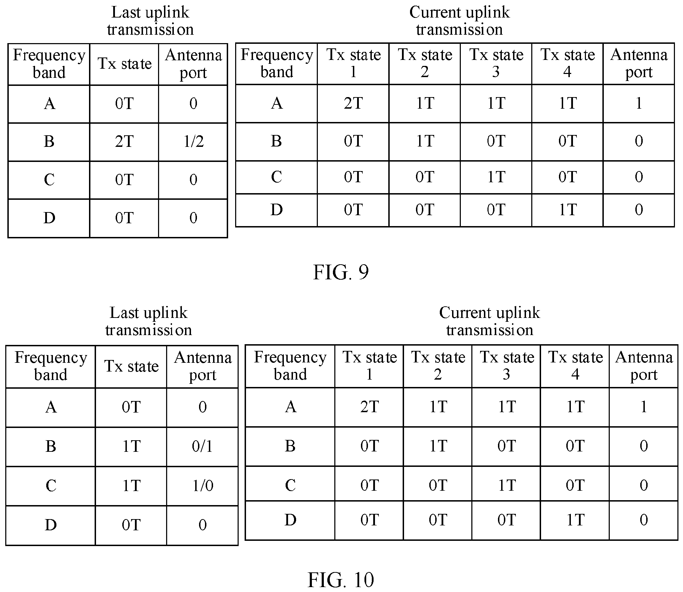

FIG. 9 shows an example in which UE cannot determine a radio frequency chain state. As shown in FIG. 9, the UE may perform Tx switching on carriers in four frequency bands. If there are two Txs on a carrier in a frequency band B in last uplink transmission, that is, the last uplink transmission is 2-port transmission or 1-port transmission (2-port transmission is supported) performed on the carrier in the frequency band B, and current uplink transmission is 1-port transmission to be performed on a carrier in a frequency band A and no uplink transmission on a carrier in another frequency band, there are four possible Tx states on a UE side that are denoted as a Tx state 1 to a Tx state 4. Details are as follows.

Tx state 1: There are two Txs on the carrier in the frequency band A.

Tx state 2: There is one Tx on each of the carrier in the frequency band A and the carrier in the frequency band B.

Tx state 3: There is one Tx on each of the carrier in the frequency band A and a carrier in a frequency band C.

Tx state 4: There is one Tx on each of the carrier in the frequency band A and a carrier in a frequency band D.

FIG. 10 shows another example in which UE cannot determine a radio frequency chain state. As shown in FIG. 10, the UE may perform Tx switching on carriers in four frequency bands. If there is one Tx on each of a carrier in a frequency band B and a carrier in a frequency band C in last uplink transmission, that is, the last uplink transmission is 1-port transmission performed on the carrier in the frequency band B, 1-port transmission performed on the carrier in the frequency band C, or 1-port transmission performed on both the carrier in the frequency band B and the carrier in the frequency band C, and current uplink transmission is 1-port transmission to be performed on a carrier in a frequency band A and no uplink transmission on a carrier in another frequency band, there are still four possible Tx states on a UE side that are a Tx state 1 to a Tx state 4.

For the UE, because there are a plurality of possibilities for a Tx state supporting the current uplink transmission, the UE side cannot determine how to perform Tx switching during the current uplink transmission.

Therefore, this application provides an uplink transmission method, so that UE can determine, in a plurality of possible Tx states supporting uplink transmission, one Tx state as a Tx state that is during the current uplink transmission.

The following describes in detail the technical solutions provided in this application.

### Solution 1

A network device configures an RRC parameter and/or indication signaling, to indicate one radio frequency chain state in the plurality of possible Tx states to be the Tx state that is during the current uplink transmission. The UE uses the radio frequency chain state indicated by a network side as the Tx state that is during the current uplink transmission.

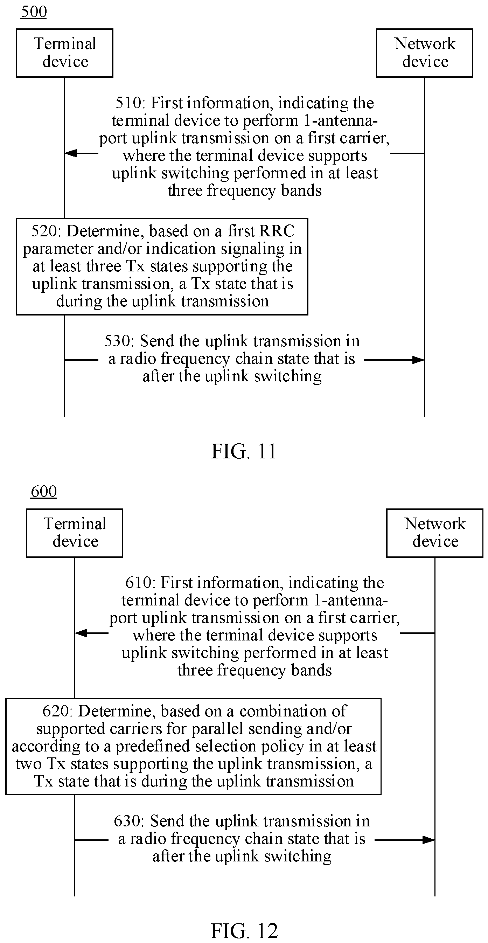

FIG. 11 is an example of an uplink transmission method according to this application.

510: A terminal device receives first information from a network device.

The first information indicates the terminal device to perform 1-antenna-port uplink transmission on a first carrier. The terminal device supports uplink switching performed in at least three frequency bands.

Alternatively, the uplink switching is radio frequency chain switching.

It should be understood that the first carrier is a carrier in a frequency band in the at least three frequency bands.

In this application, a carrier may be replaced with a frequency band to which the carrier belongs, or may be replaced with another carrier included in a frequency band to which the carrier belongs; and a frequency band may be replaced with a carrier included in the frequency band. One frequency band may include one or more carriers.

In addition, according to the foregoing descriptions, if the first information indicates the terminal device to perform 2-antenna-port uplink transmission on one carrier in a frequency band in the at least three supported frequency bands, there is only one possibility for a Tx state supporting the uplink transmission, and the UE may determine a Tx state for current uplink transmission. In this case, the technical solution provided in this application is not involved. Therefore, the technical solution in this application is mainly applicable to a case in which there are a plurality of Tx states supporting the current uplink transmission. Therefore, this application mainly focuses on how the UE determines, when the first information indicates the terminal device to perform 1-antenna-port uplink transmission on one carrier, the Tx state that is during the current uplink transmission.

520: The terminal device determines, based on a first RRC parameter and/or indication signaling in at least three radio frequency chain states supporting the current uplink transmission, a radio frequency chain state that is after the uplink switching.

For the network device, the network device determines, based on capability information reported by the terminal device, a radio frequency chain state that is of the terminal device and that is during last uplink transmission, and a status of an antenna port to be used by the terminal device to send the uplink transmission on a carrier during the current uplink transmission, the radio frequency chain state that is of the terminal device and that is during the current uplink transmission. When determining that there are two or more radio frequency chain states that are of the terminal device and that are during the current uplink transmission, the network device sends the first RRC parameter and/or the indication signaling to the terminal device, to specify one of the two or more radio frequency chain states to be used as the radio frequency chain state that is of the terminal device and that is during the current uplink transmission. Optionally, the capability information reported by the terminal device may include combinations of carriers (or frequency bands to which the carriers belong) on which the terminal device may support the Tx switching and/or parallel sending statuses supported by the terminal device on the combinations.

It should be understood that, after the uplink switching for the current uplink transmission is triggered for the terminal device, the terminal device performs uplink switching, and then performs the current uplink transmission, as shown in step 530. Therefore, the radio frequency chain state during the current uplink transmission is the radio frequency chain state that is after the uplink switching.

530: The terminal device sends (or performs) the current uplink transmission in the radio frequency chain state that is after the uplink switching.

Optionally, the indication signaling includes but is not limited to RRC signaling, media access control control element (media access control control element, MAC CE) signaling, downlink control information (downlink control information, DCI) signaling, or the like.

In the solution 1, there are a plurality of feasible implementations, so that the network side can indicate one of the plurality of possible Tx states to the UE via the first RRC parameter and/or the indication signaling. That is, the network side indicates, to the UE, the Tx state that is after the uplink switching.

A specific implementation varies with a quantity of carriers that are configured for the UE and that may be for performing Tx switching. Therefore, for a case in which the UE is configured to perform uplink switching on at least three carriers or the UE is configured to perform uplink switching on at least four carriers, the following separately describes how the network side indicates, to the UE, the Tx state that is after the uplink switching.

For brevity of description, the Tx state during the last uplink transmission is first described. Optionally, the radio frequency chain state during the last uplink transmission may be a first state or a second state.

The first state is that there are two radio frequency chains on a second carrier, and the second state is that there is one radio frequency chain on each of the second carrier and a third carrier. Optionally, the first carrier, the second carrier, and the third carrier respectively belong to three different frequency bands.

The descriptions of the Tx state during the last uplink transmission herein are applicable to all of the following embodiments. Descriptions are not repeated below again.
(1) The UE is configured to be capable of performing Tx switching on the at least three carriers. Optionally, the at least three carriers belong to three frequency bands.

In some optional implementations, for scenarios in FIG. 5 and FIG. 6, same signaling is used for indication, for example, the following implementation 1 to implementation 3. For scenarios in FIG. 9 and FIG. 10, same signaling is also used for indication, for example, the following implementation 4 to implementation 6.

### Implementation 1

The network device sends the first RRC parameter and first indication signaling to the terminal device.

When the first RRC parameter has a first value, the Tx state after the uplink switching is a first radio frequency chain state;
when the first RRC parameter has a second value, and the first indication signaling has a first value, the Tx state after the uplink switching is a second radio frequency chain state; or
when the first RRC parameter has a second value, and the first indication signaling has a second value, the Tx state after the uplink switching is a third radio frequency chain state.

The terminal device determines, based on the first RRC parameter and the first indication signaling that are from the network device, the Tx state that is after the uplink switching.

Optionally, the first RRC parameter may be uplinkTxSwitching-DualUL-Txstate-r17, and the parameter has two values: 2T and 1T.

For example, when a value of uplinkTxSwitching-DualUL-Txstate-r17 is 2T, it indicates that the Tx state after the uplink switching is the first radio frequency chain state. In this case, the network side may indicate, via the first RRC parameter, the Tx state that is after the uplink switching, where the Tx state is specifically the first radio frequency chain state.

When a value of uplinkTxSwitching-DualUL-Txstate-r17 is 1T, the network side needs to indicate, to the UE via both uplinkTxSwitching-DualUL-Txstate-r17 and the first indication signaling, the Tx state that is after the uplink switching. Therefore, when the value of uplinkTxSwitching-DualUL-Txstate-r17 is 1T, and the first indication signaling has the first value, it indicates that the second radio frequency chain state is the radio frequency chain state that is after the uplink switching. When the value of uplinkTxSwitching-DualUL-Txstate-r17 is 1T, and the first indication signaling has the second value, it indicates that the third radio frequency chain state is the radio frequency chain state that is after the uplink switching.

For example, the first indication signaling may have one bit, the first value is 0, and the second value is 1. Alternatively, the first value is 1, and the second value is 0. Alternatively, the first value and the second value of the first indication signaling may be other values. This is not limited.

Optionally, the first radio frequency chain state may be the Tx state 1 in FIG. 5 or FIG. 6. The second radio frequency chain state and the third radio frequency chain state may be the Tx state 2 and the Tx state 3 in FIG. 5 or FIG. 6 respectively.

Optionally, in this application, that the value of uplinkTxSwitching-DualUL-Txstate-r17 is 2T indicates that there are two radio frequency chains on a to-be-used carrier; and that the value of uplinkTxSwitching-DualUL-Txstate-r17 is 1T indicates that there is one radio frequency chain on a to-be-used carrier. For brevity of description, uplinkTxSwitching-DualUL-Txstate-r17 is denoted as r-17 signaling below.

FIG. 5 or FIG. 6 is used as an example. It is assumed that the first carrier is a carrier in a frequency band A. It may be found that, when a total quantity of Txs is two and remains unchanged, and a value of the r-17 signaling is 2T, it indicates that there are two Txs on the carrier (namely, the first carrier) to be used for the current uplink transmission. That is, the Tx state 1 in FIG. 5 or FIG. 6 may be indicated.

When a value of the r-17 signaling is 1T, it indicates that there is one Tx on the carrier (namely, the first carrier) to be used for the current uplink transmission. In this case, one remaining Tx may be on a carrier in a frequency band B, for example, the Tx state 2 in FIG. 5 or FIG. 6; or may be on a carrier in a frequency band C, for example, the Tx state 3 in FIG. 5 or FIG. 6. In this case, in the implementation 1, the first value and the second value of the first indication signaling indicate the Tx state 2 and the Tx state 3.

It can be learned that, in the implementation 1, the first value of the first RRC parameter may indicate the Tx state 1; or when the first RRC parameter has the second value, the Tx state 2 and the Tx state 3 are indicated with reference to a value of the first indication signaling.

Optionally, indication may alternatively be performed in the following manner:

When the first indication signaling has the first value, and the first RRC parameter has the first value, the Tx state after the uplink switching is the Tx state 1; when the first indication signaling has the first value, and the first RRC parameter has the second value, the Tx state after the uplink switching is the Tx state 2; or when the first indication signaling has the second value, the Tx state after the uplink switching is the Tx state 3.

For example, the first indication signaling may have one bit. When the bit is 0, and the value of the r-17 signaling is 1T, the Tx state after the uplink switching is the Tx state 1; or when the bit is 0, and the value of the r-17 signaling is 2T, the Tx state after the uplink switching is the Tx state 2. When the bit in the first indication signaling is 1, the Tx state after the uplink switching is the Tx state 3.

In this indication manner, an existing RRC parameter (for example, the r-17 signaling) can be fully reused, to reduce signaling overheads.

### Implementation 2

The network device sends second indication signaling to the terminal device.

The second indication signaling has at least three values, and a first value, a second value, and a third value in the at least three values respectively indicate a first radio frequency chain state, a second radio frequency chain state, and a third radio frequency chain state.

It can be learned that, in the implementation 2, the second indication signaling is additionally introduced, and different values of the second indication signaling indicate different Tx states. The UE determines, based on a value of the second indication signaling, the Tx state that is after the uplink switching.

When the second indication signaling sent by the network device has the first value, it indicates that the Tx state after the uplink switching is a Tx state 1; when the second indication signaling has the second value, it indicates that the Tx state after the uplink switching is a Tx state 2; or when the second indication signaling has the third value, it indicates that the Tx state after the uplink switching is a Tx state 3.

For example, the second indication signaling may have two bits, and values of the two bits may be 00, 01, 10, and 11. Any three of the four values may respectively indicate the Tx state 1 to the Tx state 3. For example, 00 indicates the Tx state 1, 01 indicates the Tx state 2, and the 10 indicates the Tx state 3. 11 is reserved.

In this indication manner, flexibility is high.

### Implementation 3

The network device sends the first RRC parameter to the terminal device.

The first RRC parameter has at least three values, and a first value, a second value, and a third value in the at least three values respectively indicate a first radio frequency chain state, a second radio frequency chain state, and a third radio frequency chain state.

For example, the first RRC parameter may be extended r-17 signaling. Specifically, r-17 signaling may be extended to two bits, the two bits have at least three values, and a first value, a second value, and a third value in the at least three values respectively indicate a Tx state 1, a Tx state 2, and a Tx state 3. For example, when a value of the extended r-17 signaling is 00, the Tx state 1 is indicated; when a value of the extended r-17 signaling is 01, the Tx state 2 is indicated; or when a value of the extended r-17 signaling is 10, the Tx state 3 is indicated.

Optionally, when the quantity of carriers (or frequency bands to which the carriers belong) that are configured by the network device for the terminal device and that may be for performing uplink switching is greater than or equal to three, the r-17 signaling may be extended to the two bits, and the foregoing indication is performed based on the implementation 3. When the quantity of carriers (or frequency bands to which the carriers belong) that are configured by the network device for the terminal device and that may be for performing uplink switching is equal to two, an indication manner based on existing r-17 signaling may continue to be used. That is, the r-17 signaling still has one bit.

When the UE is configured to be capable of performing Tx switching on the at least three carriers, if there are a plurality of possible states for the radio frequency chain state that is during the current uplink transmission, the foregoing three implementations may be for specifying, in the plurality of possible states, one state as the radio frequency chain state that is during the current uplink transmission.

(2) The UE is configured to be capable of performing Tx switching on the at least four carriers. Optionally, the at least four carriers belong to four frequency bands.

### Implementation 4

The network device sends the first RRC parameter and third indication signaling to the terminal device.

When the first RRC parameter has a first value, and the third indication signaling has a first value, the radio frequency chain state after the uplink switching is a first radio frequency chain state;
when the first RRC parameter has a first value, and the third indication signaling has a second value, the radio frequency chain state after the uplink switching is a second radio frequency chain state;
when the first RRC parameter has a second value, and the third indication signaling has a first value, the radio frequency chain state after the uplink switching is a third radio frequency chain state; or
when the first RRC parameter has a second value, and the third indication signaling has a second value, the radio frequency chain state after the uplink switching is a fourth radio frequency chain state.

For example, the first radio frequency chain state, the second radio frequency chain state, the third radio frequency chain state, and the fourth radio frequency chain state may be the Tx state 1, the Tx state 2, the Tx state 3, and the Tx state 4 in FIG. 9 or FIG. 10 respectively.

For example, the first RRC parameter may be r-17 signaling, and the parameter has two values: 2T and 1T.

When a value of the r-17 signaling is 1T, and the third indication signaling has the first value, the radio frequency chain state after the uplink switching is the Tx state 1; or when a value of the r-17 signaling is 1T, and the third indication signaling has the second value, the radio frequency chain state after the uplink switching is the Tx state 2.

When a value of the r-17 signaling is 2T, and the third indication signaling has the first value, the radio frequency chain state after the uplink switching is the Tx state 3; or when a value of the r-17 signaling is 2T, and the third indication signaling has the second value, the radio frequency chain state after the uplink switching is the Tx state 4.

For example, the third indication signaling may have one bit, the first value of the third indication signaling may be 0, and the second value of the third indication signaling may be 1. Alternatively, the first value of the third indication signaling may be 1, and the second value of the third indication signaling is 0. This is not limited.

In this indication manner, an existing RRC parameter (for example, the r-17 signaling) can be fully reused, to reduce signaling overheads.

### Implementation 5

The network device sends the first RRC parameter and third indication signaling to the terminal device.

When the first RRC parameter has a first value, the radio frequency chain state after the uplink switching is a first radio frequency chain state;
when the first RRC parameter has a second value, and the third indication signaling has a first value, the radio frequency chain state after the uplink switching is a second radio frequency chain state;
when the first RRC parameter has a second value, and the third indication signaling has a second value, the radio frequency chain state after the uplink switching is a third radio frequency chain state; or
when the first RRC parameter has a second value, and the third indication signaling has a third value, the radio frequency chain state after the uplink switching is a fourth radio frequency chain state.

In the implementation 5, for example, the first RRC parameter may be r-17 signaling. When a value of the r-17 signaling is 2T, the Tx state 1 in FIG. 9 or FIG. 10 may be indicated. That is, 2T is a first value of the r-17 signaling. When a value of the r-17 signaling is 1T, the Tx state 2, the Tx state 3, and the Tx state 4 are indicated by the first value, the second value, and the third value of the third indication signaling respectively. That is, 1T is a second value of the r-17 signaling. In this indication manner, an existing RRC parameter (for example, the r-17 signaling) can be fully reused, to reduce signaling overheads.

### Implementation 6

The network device sends fourth indication signaling to the terminal device.

The fourth indication signaling has at least four values, and a first value, a second value, a third value, and a fourth value in the at least four values respectively indicate a first radio frequency chain state, a second radio frequency chain state, a third radio frequency chain state, and a fourth radio frequency chain state.

For example, the fourth indication signaling may have two bits, and the two bits may have four values: 00, 01, 10, and 11. 00, 01, 10, and 11 respectively indicate the Tx state 1, the Tx state 2, the Tx state 3, and the Tx state 4 in FIG. 9 or FIG. 10.

Alternatively, the network device sends the first RRC parameter to the terminal device.

The first RRC parameter has at least four values, and a first value, a second value, a third value, and a fourth value in the at least four values respectively indicate a first radio frequency chain state, a second radio frequency chain state, a third radio frequency chain state, and a fourth radio frequency chain state.

For example, the first RRC parameter may be extended r-17 signaling. For example, the extended r-17 signaling has two bits, and the two bits may have four values: 00, 01, 10, and 11. 00, 01, 10, and 11 respectively indicate the Tx state 1, the Tx state 2, the Tx state 3, and the Tx state 4 in FIG. 9 or FIG. 10.

The foregoing separately provides detailed descriptions for a scenario of the three frequency bands and a scenario of the four frequency bands.

Optionally, the indication signaling in the scenario of the three frequency bands and the scenario of the four frequency bands may be reused for each other.

For example, the first indication signaling in the scenario of the three frequency bands and the third indication signaling in the scenario of the four frequency bands may be reused for each other. In other words, the first indication signaling and the third indication signaling are carried in a same information element. A meaning of the same information element varies with the quantity of carriers configured by the network device for the terminal device and that may be for performing Tx switching. For specific meanings, refer to the meanings of the first indication signaling and the third indication signaling in the foregoing embodiments.

For example, 1-bit indication signaling is introduced to the network side. When the UE is configured to be capable of performing Tx switching on carriers in the four frequency bands, different values of the 1-bit indication signaling may respectively indicate the Tx state 3 and the Tx state 4 in FIG. 9 or FIG. 10. The 1-bit indication signaling is, for example, the third indication signaling in the implementation 4. When the UE is configured to be capable of performing Tx switching on carriers in the three frequency bands, different values of the 1-bit indication signaling may respectively indicate the Tx state 3 in FIG. 5 or FIG. 6. The 1-bit indication signaling is, for example, the first indication signaling in the implementation 1.

Optionally, the second indication signaling in the scenario of the three frequency bands and the fourth indication signaling in the scenario of the four frequency bands may be reused for each other. In other words, the second indication signaling and the fourth indication signaling are carried in a same information element. A meaning of the same information element varies with the quantity of carriers configured by the network device for the terminal device and that may be for performing Tx switching. For specific meanings, refer to the meanings of the first indication signaling and the third indication signaling in the foregoing embodiments.

For example, 2-bit indication signaling is introduced to the network side. When the UE is configured to be capable of performing Tx switching on carriers in the four frequency bands, different values of the 2-bit indication signaling respectively indicate the Tx state 1 to the Tx state 4 (four Tx states in total) in FIG. 9 or FIG. 10. The 2-bit indication signaling is, for example, the fourth indication signaling in the implementation 6. When the UE is configured to be capable of performing Tx switching on carriers in the three frequency bands, different values of the 2-bit indication signaling respectively indicate the Tx state 1 to the Tx state 3 (three Tx states in total) in FIG. 5 or FIG. 6. The 2-bit indication signaling is, for example, the second indication signaling in the implementation 3.

In some other optional implementations, for scenarios in FIG. 5 and FIG. 6, different signaling may be used for indication, for example, the following implementation 7 or implementation 8.

### Implementation 7

A first value of the first RRC parameter indicates the Tx state 1 in FIG. 5, and a second value of the first RRC parameter indicates the Tx state 2 in FIG. 5.

Sixth indication signaling is additionally introduced, where the sixth indication signaling has at least four values. A first value in the at least four values indicates the Tx state 3 in FIG. 5. A second value, a third value, and a fourth value in the at least four values respectively indicate the Tx state 1, the Tx state 2, and the Tx state 3 in FIG. 6.

For example, the first RRC parameter may be r-17 signaling, and has two values: 2T and 1T. 2T indicates the Tx state 1 in FIG. 5, and 1T indicates the Tx state 2 in FIG. 5. For example, the sixth indication signaling may have two bits corresponding to four values: 00, 01, 10, and 11, which may respectively indicate the Tx state 3 in FIG. 5 and the Tx state 1, the Tx state 2, and the Tx state 3 in FIG. 6.

### Implementation 8

Seventh indication signaling and eighth indication signaling respectively indicate the three Tx states in FIG. 5 and the Tx states in FIG. 6.

For example, the seventh indication signaling has two bits, the two bits correspond to four values, three of the four values respectively indicate the Tx state 1, the Tx state 2, and the Tx state 3 in FIG. 5, and one remaining value in the four values is reserved. For example, the eighth indication signaling also has two bits, the two bits correspond to four values, three of the four values respectively indicate the Tx state 1, the Tx state 2, and the Tx state 3 in FIG. 6, and one remaining value in the four values is reserved.

For scenarios in FIG. 9 and FIG. 10, same signaling is also used for indication, for example, the following implementation 9 and implementation 10.

### Implementation 9

A first value of the first RRC parameter indicates the Tx state 1 in FIG. 9, and a second value of the first RRC parameter indicates the Tx state 2 in FIG. 9. In addition, 1-bit ninth indication signaling is additionally introduced. One bit in the ninth indication signaling corresponds to two values, and the two values respectively indicate the Tx state 3 and the Tx state 4 in FIG. 9. In addition, 2-bit tenth indication signaling is additionally introduced. Two bits in the tenth indication signaling correspond to four values, and the four values respectively indicate the Tx state 1 to the Tx state 4 (four Tx states in total) in FIG. 10.

For example, the first RRC parameter may be r-17 signaling, and may indicate two values. For example, 2T is the first value of the first RRC parameter, and 1T is the second value of the first RRC parameter. Alternatively, 1T is the first value of the first RRC parameter, and 2T is the second value of the first RRC parameter. This is not limited.

### Implementation 10

2-bit eleventh indication signaling is additionally introduced. The 2-bit eleventh indication signaling indicates the Tx state 1 to the Tx state 4 (four Tx states in total) in FIG. 9. In addition, 2-bit twelfth indication signaling is additionally introduced. The 2-bit twelfth indication signaling indicates the Tx state 1 to the Tx state 4 (four Tx states in total) in FIG. 10.

Optionally, the eleventh indication signaling and the twelfth indication signaling, and indication signaling in a scenario of three frequency bands may be reused for each other. For example, in a scenario of four frequency bands, the eleventh indication signaling and the twelfth indication signaling indicate a total of eight Tx states in FIG. 9 and FIG. 10; and in the scenario of the three frequency bands, the eleventh indication signaling and the twelfth indication signaling indicate a total of six Tx states in FIG. 5 and FIG. 6. For example, four values corresponding to two bits in the eleventh indication signaling may respectively indicate the Tx state 1, the Tx state 2, and the Tx state 3 in FIG. 5, and the Tx state 1 in FIG. 6. In addition, two of four values corresponding to two bits in the twelfth indication signaling may respectively indicate the remaining Tx state 2 and Tx state 3 in FIG. 6. It may be understood that, in the scenario of the three frequency bands, two unused values in the four values corresponding to the twelfth indication signaling may be reserved. The foregoing describes in detail the plurality of implementations in the solution 1 provided in this application.

It can be learned that these implementations in the solution 1 ensure maximum scheduling flexibility. In addition, in an indication signaling reusing solution, when one piece of indication signaling may be applied to different frequency band scenarios (for example, the three frequency bands or the four frequency bands) to indicate a Tx state, a meaning of the indication signaling varies with the different frequency band scenarios, but uniformity of the indication signaling can be ensured, to reduce indication signaling overheads.

### Solution 2

A terminal device determines, based on a combination of carriers that are supported by the terminal device and that are for parallel sending and/or according to a predefined selection policy, a radio frequency chain state that is after uplink switching.

The following provides descriptions with reference to FIG. 12.

FIG. 12 shows another example of an uplink transmission method according to this application.

610: A terminal device receives first information from a network device, where the first information indicates the terminal device to perform 1-antenna-port uplink transmission on a first carrier.

The terminal device supports uplink switching performed in at least three frequency bands.

For step 610, refer to the descriptions in step 510. Details are not described herein again.

620: The terminal device determines, based on a combination of supported carriers for parallel sending and/or according to a predefined selection policy in at least two radio frequency chain states supporting the uplink transmission, a radio frequency chain state that is after the uplink switching.

The predefined selection policy includes one or more of the following:
A quantity of carriers involved in the uplink switching is smallest;
a quantity of frequency bands involved in the uplink switching is smallest;
the uplink switching does not involve a carrier on which there is no uplink transmission;
the uplink switching does not involve a carrier on which there is no radio frequency chain; or
switching time of the uplink switching satisfies a preset condition.

Optionally, the preset condition may be that the switching time of the uplink switching is shortest or that the switching time of the uplink switching is less than or equal to a specified threshold.

In addition, the carrier involved in the uplink switching is a carrier that can ensure normalization of current uplink transmission.

630: The terminal device sends the current uplink transmission in the radio frequency chain state that is after the uplink switching.

In the solution 2, the terminal device determines, based on the combination of the supported carriers that may be for the parallel sending and/or according to the predefined selection policy, the Tx state that is after the uplink switching.

Optionally, in some implementations, the terminal device may exclude a part of Tx states from the plurality of possible Tx states based on the combination of the supported carriers that may be for the parallel sending, according to the predefined selection policy, or based on a combination thereof. In the scenario of the three frequency bands, for example, in FIG. 5 or FIG. 6, there are three possible Tx states. In the scenario of the four frequency bands, for example, in FIG. 9 or FIG. 10, there are four possible Tx states. After a part of Tx states are excluded from the plurality of possible Tx states, there may be one or more remaining Tx states. If there is only one remaining Tx state after the part of Tx states are excluded, the remaining Tx state is used as the Tx state that is after the uplink switching.

In some other implementations, after the terminal device excludes a part of Tx states from the plurality of possible Tx states based on the combination of the supported carriers that may be for the parallel sending and/or according to the predefined selection policy, there are still two or more remaining Tx states. That is, the remaining Tx states are not unique. In this case, with reference to another Tx state selection manner provided in this application, selection needs to continue to be performed from the at least two remaining Tx states, and one of the Tx states is finally determined as the Tx state that is after the uplink switching. It may be found that a process of selecting the Tx state that is after the uplink switching may alternatively be actually considered as a process of excluding the part of Tx states from the plurality of possible Tx states and finally leaving one Tx state.

Optionally, in an implementation, the terminal device may alternatively first exclude a part of Tx states based on another Tx state selection manner provided in this application, and then use the solution 2, that is, determine, based on the combination of the carriers that are supported by the terminal device and that may be for the parallel sending and/or according to the predefined selection policy, the Tx state that is after the uplink switching. For example, the terminal device first excludes the part of Tx states from the plurality of possible Tx states based on an RRC parameter and/or indication signaling from the network device, and then determines, based on the combination of the carriers that are supported by the terminal device and that may be for the parallel sending and/or according to the predefined selection policy, one Tx state in Tx states that are remaining after the part of Tx states are excluded. Optionally, the RRC parameter and/or the indication signaling may be the RRC parameter and/or the indication signaling in the solution 1. For example, when r17 signaling has a first value (for example, 2T), the terminal device selects a first radio frequency chain state (for example, the Tx state 1 in FIG. 5, FIG. 6, FIG. 9, or FIG. 10); or when r17 signaling has a second value (for example, 1T), the terminal device determines the Tx state according to the predefined selection policy (for FIG. 10, when a value of r17 signaling is 1T, Tx state 4 is excluded and the Tx state 2 and the Tx state 3 are remaining after, for example, the policy that the quantity of frequency bands involved in the uplink switching is smallest is used; and for FIG. 5 or FIG. 9, the Tx state 2 is remaining after, for example, the policy that the quantity of frequency bands involved in the uplink switching is smallest, a corresponding policy that a carrier involved in the uplink switching includes a carrier on which there is no Tx during last uplink transmission, or a corresponding policy that a carrier involved in the uplink switching includes a carrier on which there is no uplink transmission is used). In this case, if there are still a plurality of remaining Tx states, the Tx state is determined by using the RRC parameter and/or the indication signaling from the network device (for example, for FIG. 10, one Tx state is selected from the Tx state 2 and the Tx state 3 based on the indication signaling from the network device). For example, the RRC parameter may be the first RRC parameter in the solution 1, and/or the indication signaling may be the indication signaling in the solution 1. This is not limited. A person skilled in the art may clearly know, based on the descriptions in the solution 1, how the first RRC parameter and/or the indication signaling in the solution 1 indicate/indicates the plurality of remaining Tx states. Details are not described herein again.

The following describes in detail a process in which the terminal device selects the Tx state based on the combination of the supported carriers that may be for the parallel sending or according to the predefined selection policy in the solution 2.
(1) The terminal device excludes the part of Tx states from the plurality of possible Tx states based on the combination of the supported carriers that may be for the parallel sending.

If the scenario of the three frequency bands or the scenario of the four frequency bands supports only a combination of limited frequency bands (or carriers) for 1T+1T parallel sending, a quantity of the possible Tx states decreases, which is equivalent to excluding the part of Tx states from the plurality of possible Tx states. In some scenarios, the Tx state after the uplink switching may be determined without further determining and based only on the combination of the supported carriers that may be for the parallel sending. However, in some scenarios, there are still two or more remaining Tx states after the part of Tx states are excluded. In this case, one Tx state needs to be finally selected, as the Tx state that is after the uplink switching, from the remaining Tx states with reference to the another Tx state selection manner provided in this application.

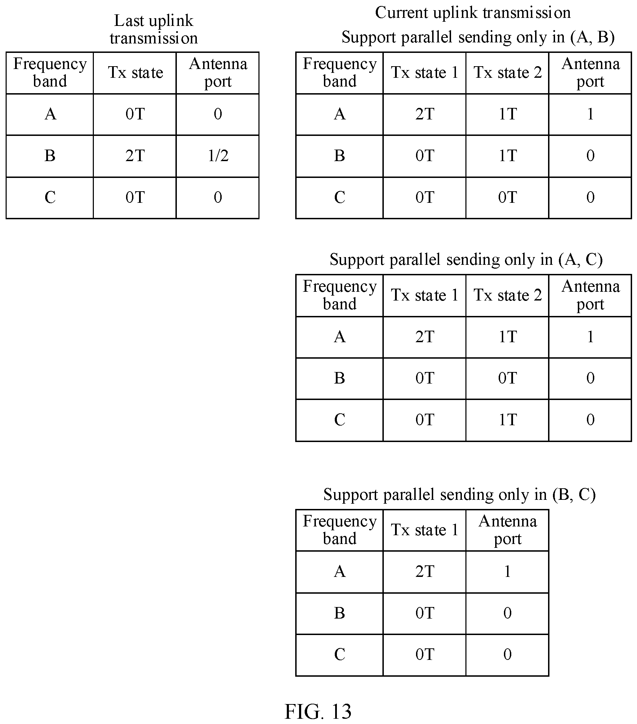

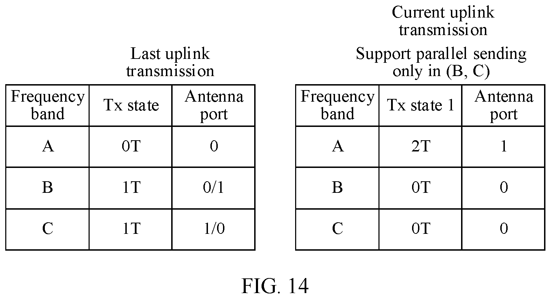

Optionally, if the terminal device supports parallel sending only in two frequency bands, in possible Tx states supporting the current uplink transmission in FIG. 5 and FIG. 6, only Tx states shown in FIG. 13 and FIG. 14 are respectively remaining. FIG. 5 corresponds to FIG. 13, and FIG. 6 corresponds to FIG. 14.

FIG. 13 shows an example of excluding a part of Tx states based on a combination of supported frequency bands for parallel sending.

As shown in FIG. 13, there are two radio frequency chains on a carrier in a frequency band B in last uplink transmission, and current uplink transmission is 1-port transmission to be performed on a carrier in a frequency band A.

If a terminal device supports parallel sending only in the frequency band A and the frequency band B, Tx states supporting the current uplink transmission include only a Tx state 1 and a Tx state 2.

The Tx state 1 is that there are two Txs on the carrier in the frequency band A, and the Tx state 2 is that there is one Tx on each of the carrier in the frequency band A and the carrier in the frequency band B. That is, a Tx state 3 is excluded.

If a terminal device supports parallel sending only in the frequency band A and a frequency band C, Tx states supporting the current uplink transmission include only a Tx state 1 and a Tx state 3. The Tx state 1 is that there are two Txs on the carrier in the frequency band A, and the Tx state 3 is that there is one Tx on each of the carrier in the frequency band A and the carrier in the frequency band C. That is, a Tx state 2 is excluded.

If a terminal device supports parallel sending only in the frequency band B and a frequency band C, a Tx state supporting the current uplink transmission includes only a Tx state 1. That is, there are two Txs on the carrier in the frequency band A.

In both of the first two cases, there are two remaining Tx states. In this case, one Tx state may be further excluded from the two remaining Tx states with reference to another manner, and finally one Tx state is remaining, and is used as a Tx state that is after uplink switching. However, in the third case, a remaining Tx state includes only the Tx state 1, and the Tx state 1 is a Tx state that is after uplink switching. In this case, further exclusion does not need to be performed with reference to another manner anymore.

FIG. 14 shows another example of excluding a part of Tx states based on a combination of supported frequency bands for parallel sending.

As shown in FIG. 14, there is one radio frequency chain on each of a carrier in a frequency band B and a carrier in a frequency band C in last uplink transmission, and current uplink transmission is 1-port transmission to be performed on a carrier in a frequency band A.

If a terminal device supports parallel sending only in the frequency band B and the frequency band C, a Tx state supporting the current uplink transmission includes only a Tx state 1. That is, a Tx state 2 and a Tx state 3 are excluded. In this case, the Tx state 1 is a Tx state that is after uplink switching.

In FIG. 13 or FIG. 14, if there are two or more remaining Tx states, the Tx state after the uplink switching may be determined in the remaining Tx states with reference to another Tx state selection manner.

FIG. 13 is used as an example, there are only two remaining Tx states. The terminal device selects, from the two remaining Tx states in a plurality of manners, one Tx state as the Tx state that is after the uplink switching.

Optionally, in an example, the terminal device selects one Tx state from the two remaining Tx states based on an RRC parameter and/or indication signaling from a network device. For example, the RRC parameter may be the first RRC parameter in the solution 1. For another example, the RRC parameter may be a second RRC parameter from the network device. Optionally, the second RRC parameter may be one additionally introduced bit, the bit may have two different values, and the two different values may indicate the two remaining Tx states. Alternatively, the second RRC parameter may be the r-17 signaling. That is, the r-17 signaling is reused. The r-17 signaling has two different values, and the two different values may indicate the two remaining Tx states. In addition, optionally, the indication signaling may be the indication signaling in the solution 1 or fifth indication signaling from the network device. Optionally, the fifth indication signaling indicates a carrier or a frequency band from which Tx switching is preferentially performed during the uplink switching. It should be understood that a function of the second RRC parameter and/or the fifth indication signaling in the solution 2 is indicating one of the plurality of remaining Tx states. Specific implementation of the indication is not limited.

It should be understood that, for the network device, the network device determines, based on the combination of the carriers that are supported by the terminal device and that may be for the parallel sending and/or according to a predefined selection policy, a radio frequency chain state that is of the terminal device and that is during uplink transmission. Optionally, if two or more radio frequency chain states that are of the terminal device and that are during the uplink transmission are determined based on the combination of the carriers that are supported by the terminal device and that may be for the parallel sending and/or according to the predefined selection policy, the network device indicates one of the two or more radio frequency chain states to the terminal, to specify the radio frequency chain state that is of the terminal device and that is during the uplink transmission. For example, the network device sends the second RRC parameter and/or the fifth indication signaling to the terminal device. The second RRC parameter and/or the fifth indication signaling indicate/indicates one of the two or more radio frequency chain states. Optionally, in another example, the terminal device selects one Tx state from the two remaining Tx states in a predefined manner (for example, a solution 3 below).

Optionally, in another example, the terminal device selects one Tx state from the two remaining Tx states based on a length of switching time of the uplink switching. For example, a Tx state with shorter switching time is selected.

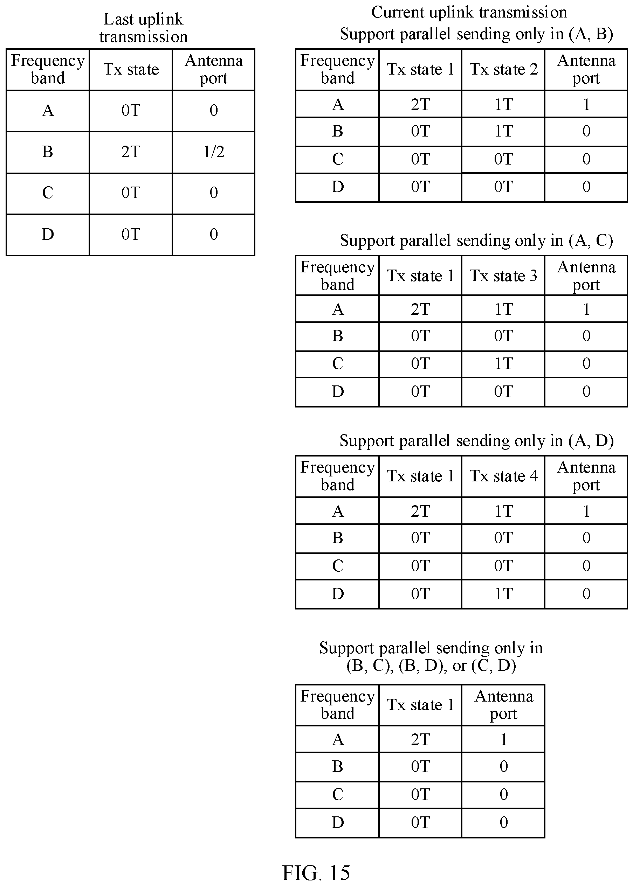

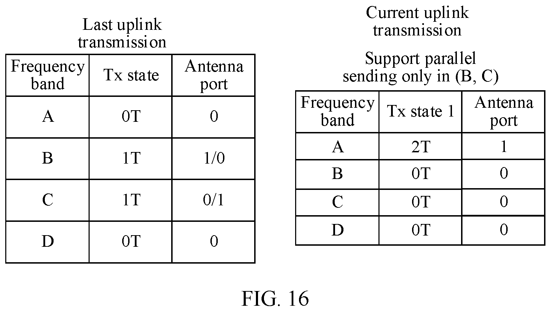

Likewise, if parallel sending only in two frequency bands is supported, in possible Tx states supporting the current uplink transmission in FIG. 9 and FIG. 10, only Tx states shown in FIG. 15 and FIG. 16 are remaining. FIG. 9 corresponds to FIG. 15, and FIG. 10 corresponds to FIG. 16. A person skilled in the art may clearly learn of a remaining Tx state in each case based on marks in FIG. 15 to FIG. 16. Details are not described herein again.

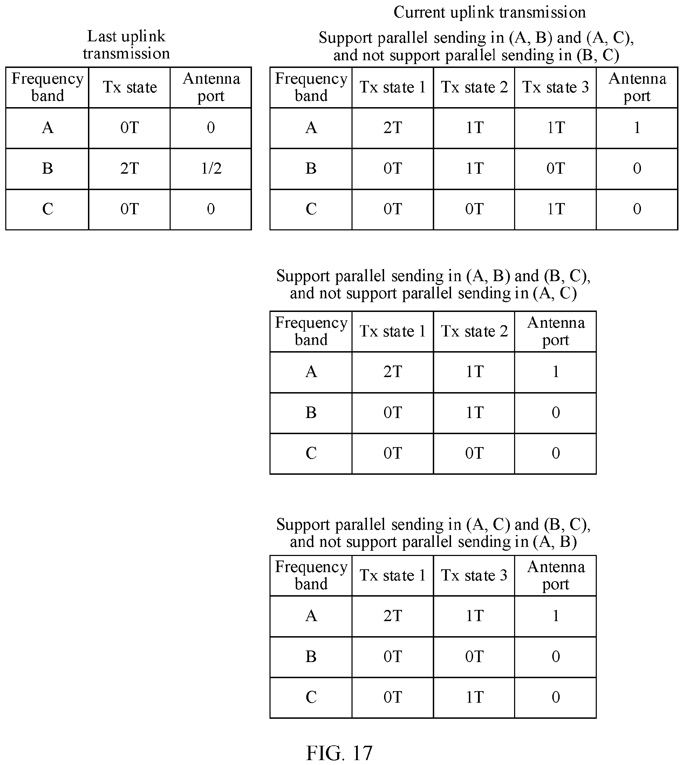

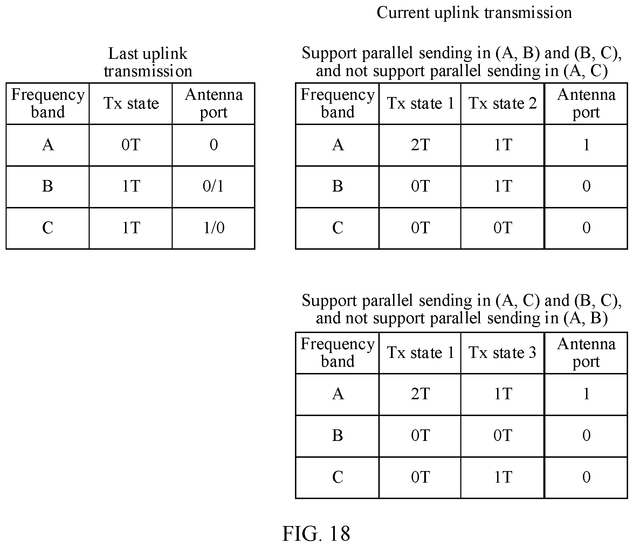

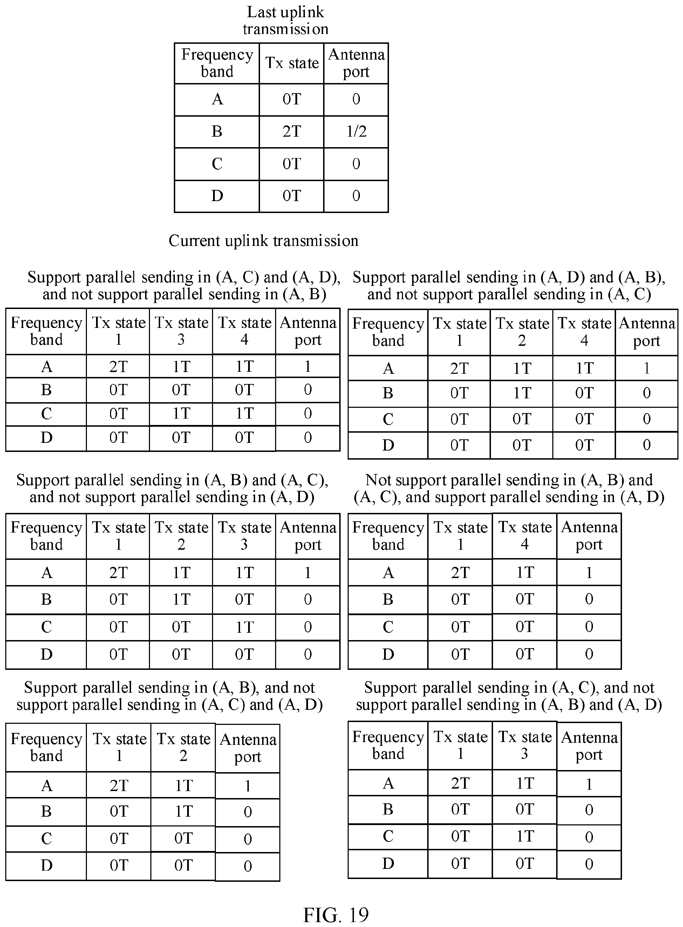

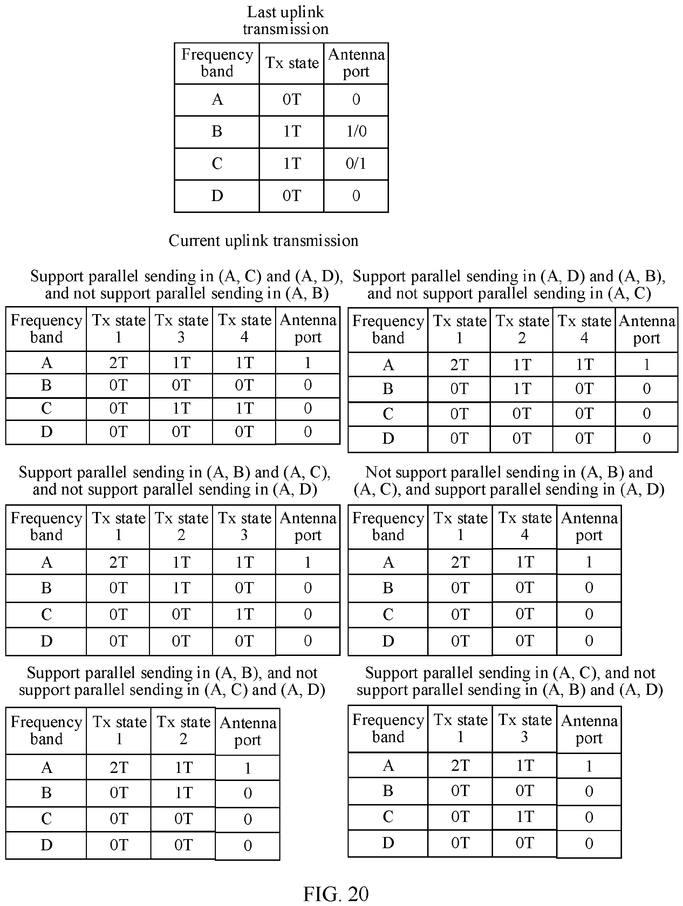

Optionally, if parallel sending in more than two frequency bands is supported, in possible Tx states supporting the current uplink transmission in FIG. 5 and FIG. 6, only Tx states shown in FIG. 17 and FIG. 18 are remaining; and in possible Tx states supporting the current uplink transmission in FIG. 9 and FIG. 10, only Tx states shown in FIG. 19 and FIG. 20 are remaining. Likewise, details are not described one by one again.

It can be learned that there are two or more remaining Tx states (that is, at least two Tx states are remaining) in each of FIG. 17 to FIG. 20. Therefore, one Tx state needs to be finally selected from the at least two remaining Tx states with reference to the another Tx state selection manner.

The foregoing describes in detail a process in which the terminal device selects the Tx state based on the supported carriers (or frequency bands to which the carriers belong) for the parallel sending. Then, the following describes a process in which the terminal device selects the Tx state according to the predefined selection policy.

(2) The terminal device excludes the part of Tx states from the plurality of possible Tx states according to the predefined selection policy.

For the predefined selection policy, refer to the descriptions in step 630. Details are not described herein again.

The following provides examples of excluding the part of Tx states from the plurality of possible Tx states by using the predefined selection policy.
(a) For example, it is assumed that the predefined selection policy includes one or more of the following:
   The Tx switching involves fewest carriers (or involves fewest frequency bands);
   the carrier involved in the Tx switching should not involve a carrier on which there is no transmission; or
   the carrier involved in the Tx switching does not involve the carrier on which there is no Tx.

After the foregoing predefined selection policy is used for selection, the part of Tx states are excluded in FIG. 5 and FIG. 6, or FIG. 9 and FIG. 10.

FIG. 5 or FIG. 9 is used as an example. The state 3 may be excluded.

Uplink switching corresponding to the Tx state 3 in FIG. 5 and FIG. 9 involves three frequency bands (or three carriers), and a quantity of the involved frequency bands (or carriers) is not smallest; a carrier involved in uplink switching corresponding to the Tx state 3 in FIG. 5 and FIG. 9 includes the carrier (for example, a carrier C) on which there is no Tx during the last uplink transmission; or a carrier involved in uplink switching corresponding to the Tx state 3 in FIG. 5 and FIG. 9 includes the carrier on which there is no uplink transmission, for example, there is no transmission on a carrier C in both the last uplink transmission and the current uplink transmission. Therefore, the Tx state 3 in FIG. 5 and FIG. 9 is excluded. Optionally, the Tx state 1 and the Tx state 2 may be remaining.

FIG. 6 or FIG. 10 is used as an example. The Tx state 1 and/or the Tx state 4 may be excluded.

Uplink switching corresponding to the Tx state 1 in FIG. 6 and FIG. 10 involves three frequency bands (or carriers), uplink switching corresponding to the Tx state 4 in FIG. 10 involves four frequency bands (or carriers), and both the Tx state 2 and the Tx state 3 in FIG. 6 and FIG. 10 involve only two frequency bands (or carriers). Therefore, if the policy that the quantity of frequency bands involved in the uplink switching is smallest is used, the Tx state 1 and/or the Tx state 4 may be excluded. Optionally, the Tx state 2 and the Tx state 3 may be remaining.

FIG. 6 or FIG. 10 is used as an example. The state 4 may be excluded.

A carrier involved in uplink switching corresponding to the Tx state 4 in FIG. 10 includes a carrier (for example, a carrier in a frequency band D) on which there is no Tx during the last uplink transmission. In other words, uplink switching corresponding to the Tx state 4 includes a carrier on which there is no transmission. For example, there is no transmission on the carrier in the frequency band D during the last uplink transmission and the current uplink transmission. Therefore, if the policy that the carrier involved in the uplink switching should not involve the carrier on which there is no transmission or the policy that the carrier involved in the uplink switching should not involve the carrier on which there is no Tx is used, the state 4 may be excluded. Optionally, the Tx state 1, the Tx state 2, and the Tx state 3 may be remaining.

(b) For example, it is assumed that the predefined selection policy is that the Tx switching should involve switching of fewest Txs.

FIG. 5 or FIG. 9 is used as an example. In this case, only the Tx state 2 is remaining.

Uplink switching corresponding to only the Tx state 2 involves switching of only one Tx, and uplink switching corresponding to all other Tx states involves switching of two Txs. In this case, because there is only one Tx state 2 in terms of the remaining Tx state, further screening does not need to be performed in the another Tx state selection manner anymore.

FIG. 6 or FIG. 10 is used as an example. In this case, there are two remaining Tx states, namely, the Tx state 2 and the Tx state 3.

A reason is as follows: Only the Tx state 2 and the Tx state 3 involve switching of only one Tx, and all other Tx states involve switching of two Txs.

It may be found that, after exclusion is performed according to the predefined selection policy (a) or (b), in some cases, there may still be a plurality of remaining Tx states. In this case, one Tx state needs to be selected from the remaining Tx states with reference to the another Tx state selection manner.

Further, the terminal device may select one Tx state from the remaining Tx states based on the RRC parameter and/or the indication signaling from the network device.

For example, in an implementation, same indication signaling is used for FIG. 5 and FIG. 6 in the scenario of the three frequency bands and FIG. 9 and FIG. 10 in the scenario of the four frequency bands.

For example, the r-17 signaling is reused. For example, meanings of the two values of the r-17 signaling are redefined as follows: When there is no other carrier for uplink transmission, transmission is performed by using one Tx or two Txs on a carrier (for example, the carrier in the frequency band A in FIG. 5) for 1-port transmission, regardless of a quantity of carriers involved in the switching. That is, when a value of the r-17 signaling is 2T, it indicates that transmission is performed by using the two Txs on the carrier for the 1-port transmission; or when a value of the r-17 signaling is 1T, it indicates that transmission is performed by using the one Tx on the carrier for the 1-port transmission.

For FIG. 5 or FIG. 9, if a value of the r-17 signaling is 1T, the Tx state 1 is excluded from the remaining Tx states; or if a value of the r-17 signaling is 2T, the Tx state 2 and the Tx state 3 are excluded from the remaining Tx states.

For example, in another implementation, different indication signaling is used for FIG. 5 and FIG. 6 in the scenario of the three frequency bands and FIG. 9 and FIG. 10 in the scenario of the four frequency bands.

For example, for FIG. 5 and FIG. 9, the r-17 signaling is reused. If a value of the r-17 signaling is 1T, the Tx state 1 is excluded; or if a value of the r-17 signaling is 2T, the Tx state 2 is excluded. For FIG. 6 and FIG. 10, new indication signaling is introduced, for example, fifth indication signaling. The fifth indication signaling indicates a carrier or a frequency band from which Tx switching is preferentially performed during the uplink switching. If the fifth indication signaling indicates to preferentially switch 1Tx from the carrier in the frequency band B, the Tx state 2 is excluded.

For example, in still another implementation, there is same signaling and different signaling for

FIG. 5 and FIG. 6 in the scenario of the three frequency bands and FIG. 9 and FIG. 10 in the scenario of the four frequency bands.

For example, if the predefined selection policy is that the carrier involved in the Tx switching should not involve the carrier on which there is no transmission or the carrier on which there is no Tx, for FIG. 5 and FIG. 9, the Tx state 1 and the Tx state 2 are remaining; and for FIG. 6 and FIG. 10, the Tx state 1, the Tx state 2, and the Tx state 3 are remaining. In this case, the r-17 signaling may be reused first. If a value of the r-17 signaling is 2T, the Tx state 1 is selected in each of FIG. 5, FIG. 6, FIG. 9, and FIG. 10. If a value of the r-17 signaling is 1T, the Tx state 2 may be directly selected in FIG. 5 and FIG. 9. However, in FIG. 6 and FIG. 10, new indication signaling needs to be introduced, to further perform selection from the Tx state 2 and the Tx state 3. For example, whether to switch 1Tx from the frequency band B or the frequency band C is determined based on an indication of fifth indication signaling.

Optionally, in some other implementations, r-17 signaling may alternatively be first reused for selection. If there are still two or more remaining Tx states after selection is performed by using the r-17 signaling, selection is performed with reference to a manner such as the combination of the carriers (or the frequency bands) that are supported by the terminal device and that may be for the parallel sending, the predefined selection policy, and introduction of additional indication signaling, to finally determine one Tx state as the Tx state that is after the uplink switching. Optionally, in the foregoing predefined selection policy, the switching time of the uplink switching may satisfy the preset condition.

For example, the preset condition may be that the switching time is shortest.

For example, if time of switching between the frequency band A and the frequency band B is shortest, that is, less than time of switching between any other two frequency bands, the Tx state 3 may be excluded in FIG. 5 in the scenario of the three frequency bands, the Tx state 4 may be excluded in FIG. 6 in the scenario of the three frequency bands, the Tx state 3 and the Tx state 4 may be excluded in FIG. 9 in the scenario of the four frequency bands, and the Tx state 2 and the Tx state 4 may be excluded in FIG. 10 in the scenario of the four frequency bands.

In FIG. 5, the Tx state 3 involves switching between the frequency band B and the frequency band C. In FIG. 6, the Tx state 2 involves switching between the frequency band A and the frequency band C. In FIG. 9, the Tx state 3 involves the switching between the frequency band B and the frequency band C, and the Tx state 4 involves switching between the frequency band B and the frequency band D. In FIG. 10, the Tx state 2 involves the switching between the frequency band A and the frequency band C, and the Tx state 4 involves the frequency band B and the frequency band D, or the frequency band C and the frequency band D. However, switching time needed for the switching is greater than the time of the switching between the frequency band A and the frequency band B. Therefore, the Tx states are excluded.

For example, the preset condition may be that the switching time is less than or equal to the specified threshold.

The terminal device excludes, from the plurality of possible Tx states based on the preset condition, a Tx state whose switching time is greater than the specified threshold. For example, if time of the switching between the frequency band A and the frequency band C is greater than the specified threshold, the Tx state 2 in FIG. 6 in the scenario of the three frequency bands is excluded, and the Tx state 2 in FIG. 10 in the scenario of the four frequency bands is excluded. If time of the switching between the frequency band B and the frequency band C is greater than the specified threshold, the Tx state 3 in FIG. 5 in the scenario of the three frequency bands is excluded, and the Tx state 3 in FIG. 9 in the scenario of the four frequency bands is excluded.

Optionally, if there are still at least two remaining Tx states after exclusion is performed based on the switching time, further screening (in other words, exclusion) may be performed with reference to the another Tx state selection manner.

For example, if switching time of two remaining Tx states is the same, or switching time of each of two remaining Tx states is less than the specified threshold, selection is performed by reusing the r-17 signaling, by additionally introducing the new indication signaling, or according to another policy (for example, the quantity of carriers involved in the uplink switching is smallest, or the uplink switching does not involve the carrier on which there is no transmission) in the predefined selection policy. For example, in the scenario of the four frequency bands, if the two remaining Tx states are the Tx state 3 and the Tx state 4, selection is further performed by using the fifth indication signaling. The fifth indication signaling indicates a carrier from which Tx switching is preferentially performed. Then, one Tx state is selected from the Tx state 3 and the Tx state 4. For another example, in the scenario of the four frequency bands, if the two remaining Tx states are the Tx state 1 and the Tx state 2, r-17 signaling may alternatively be reused to select one Tx state from the two Tx states.

Based on the descriptions of the foregoing embodiment, it can be learned that the plurality of policies involved in the predefined selection policy may be used in any combination with each other. For example, the policy that the switching time is shortest is used in combination with the policy that the quantity of involved carriers is smallest, or is used in combination with the policy that the uplink switching does not involve the carrier on which there is no Tx. Alternatively, the plurality of policies may be combined with a Tx state selection manner other than the predefined selection policy and provided in this application. For example, one or more of these policies are used in combination with the r-17 signaling or the additionally introduced indication signaling. In addition, in an embodiment in which the different Tx state selection manners are used in combination to determine the Tx state, a sequence in which the different Tx state selection manners are used is not limited.

For example, selection may be first performed based on one or more policies in the predefined selection policy. If there are at least two remaining Tx states, the r-17 signaling is reused, or the newly introduced indication signaling is used, to perform selection from the remaining Tx states. Alternatively, the r-17 signaling may be first reused for selection. If there are at least two remaining Tx states, selection is performed from the remaining Tx states by using one or more policies in the predefined selection policy. Examples are not described one by one.

To reduce indication overheads for specially configuring an RRC parameter and/or indication signaling to assist the terminal device in determining the Tx state that is after the uplink switching, the terminal device preferentially determines, by using the combination of the supported carriers for the parallel sending and/or the predefined selection policy, the Tx state that is after the uplink switching. If there are still two or more remaining Tx states after the part of Tx states are excluded from the plurality of possible Tx states based on the combination of the supported carriers for the parallel sending and/or according to the predefined selection policy, one Tx state is selected from the remaining Tx states with reference to the RRC parameter and/or the indication signaling configured by the network device.

### Solution 3

In a predefined manner, one Tx state is selected from the plurality of possible Tx states to be used as a Tx state that is after uplink switching.

That is, in the solution 3, the one Tx state is specified, in the predefined manner, as the Tx state that is after the uplink switching.

For example, for FIG. 5 and FIG. 6 in the scenario of the three frequency bands, the Tx state 1 is predefined as the Tx state that is after the uplink switching; the Tx state 2 is predefined as the Tx state that is after the uplink switching; or the Tx state 3 is predefined as the Tx state that is after the uplink switching. When the Tx state 1 is selected, uplink transmission performance may be better ensured. When the Tx state 2 in FIG. 5 or the Tx state 2 or the Tx state 3 in FIG. 6 is selected, a quantity of Txs involved in the uplink switching is smallest.

For example, for FIG. 9 and FIG. 10 in the scenario of the four frequency bands, the Tx state 1, the Tx state 2, the Tx state 3, or the Tx state 4 may be predefined as the Tx state that is after the uplink switching. When the Tx state 1 is selected, uplink transmission performance may be better ensured. When the Tx state 2 in FIG. 9 or the Tx state 2 or the Tx state 3 in FIG. 10 is selected, a quantity of Txs involved in the uplink switching is smallest. Alternatively, in the scenario of the four frequency bands, a Tx state predefined in the scenario of the three frequency bands may still be used. That is, one of the Tx state 1, the Tx state 2, or the Tx state 3 is selected. Solutions in different scenarios are unified.

It can be learned that, in the solution 3, a Tx state is specified, in the predefined manner, as the Tx state that is after the uplink switching, and the solution 3 does not need to be used in combination with another Tx state determining manner. In addition, signaling overheads for determining the Tx state by a terminal device can be reduced by using the solution 3.

Optionally, solution 3 may alternatively be used in combination with the another Tx state determining manner. For example, after selection is performed in another manner, if there are at least two remaining Tx states, and the remaining Tx states include the Tx state specified in the predefined manner, the Tx state specified in the predefined manner may be directly used as the Tx state that is after the uplink switching. For example, in the scenario of the three frequency bands, if remaining Tx states are the Tx state 2 and the Tx state 3 after selection is performed according to a predefined selection policy, and the predefined Tx state after the uplink switching is the Tx state 2, the Tx state 3 is excluded, and the Tx state 2 is the Tx state that is after the uplink switching.

### Solution 4

A Tx state after uplink switching is determined based on a type of the uplink transmission. Alternatively, after a part of Tx states are excluded from the plurality of possible Tx states based on a type of the uplink transmission, a Tx state after uplink switching is determined in remaining Tx states with reference to another Tx state selection manner.

For example, if the type of the uplink transmission is a scheduling request (scheduling request, SR), a physical random access channel (physical random access channel, PRACH), a physical uplink control channel (physical uplink control channel, PUCCH), or a physical uplink shared channel (physical uplink shared channel, PUSCH) whose transmitted precoding matrix indicator (transmitted precoding matrix indicator, TPMI) is [1, 0], there is one Tx on a carrier to be used in the current uplink transmission. Therefore, a Tx state 1 may be excluded. In a scenario of three frequency bands, one Tx state is selected from a Tx state 2 and a Tx state 3 with reference to another solution. In a scenario of four frequency bands, one Tx state is selected from a Tx state 2, a Tx state 3, and a Tx state 4 with reference to another solution.

For example, if the type of the uplink transmission is a sounding reference signal (sounding reference signal, SRS), or a PUSCH whose TPMI is [1, 0] or [1, 1], or a configured grant (configured grant, CG) PUSCH, there are two Txs on a carrier to be used during the current uplink transmission. In this case, only the Tx state 1 is remaining regardless of the scenario of the three frequency bands or the scenario of the four frequency bands.

Using one of the foregoing solution 1 to solution 4, for example, the solution 1, the solution 2, the solution 3, or the solution 4, a combination of some solutions in these the solutions, for example, a combination of the solution 1 and the solution 2, a combination of the solution 2 and the solution 3, or a combination of the solution 2, the solution 3, and the solution 4, a combination of different implementations in one solution, for example, a combination of different predefined selection policies in the solution 2, or a combination of implementations in different solutions, for example, a combination of different predefined selection policies in the solution 2 and the solution 3, may enable the network device and the terminal device to align the Tx state that is of the terminal device and that is during the current uplink transmission.

In embodiments of this application, unless otherwise stated or there is a logic conflict, terms and/or descriptions between different embodiments are consistent and may be mutually referenced, and technical features in the different embodiments may be combined based on an internal logical relationship thereof, to form a new embodiment. The foregoing method embodiments may be implemented separately or in combination.

The foregoing describes in detail the uplink transmission methods provided in this application, and the following describes communication apparatuses provided in this application.

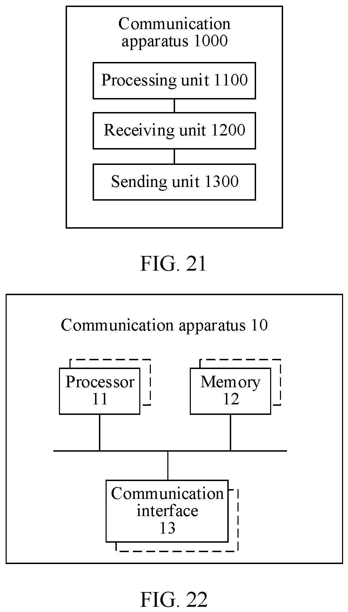

FIG. 21 is a schematic block diagram of a communication apparatus according to this application. As shown in FIG. 21, the communication apparatus 1000 includes a processing unit 1100, a receiving unit 1200, and a sending unit 1300.

Optionally, the communication apparatus 1000 may correspond to the terminal device in embodiments of this application.

In an implementation, the units in the communication apparatus 1000 are configured to implement the following functions:
The receiving unit 1200 is configured to receive first information, where the first information indicates the communication apparatus to perform 1-antenna-port uplink transmission on a first carrier, and the communication apparatus supports uplink switching performed in at least three frequency bands.

The processing unit 1100 is configured to determine, based on a first RRC parameter and/or indication signaling in at least three radio frequency chain states supporting the uplink transmission, a radio frequency chain state that is after the uplink switching.

The sending unit 1300 is configured to send the uplink transmission in the radio frequency chain state that is after the uplink switching.

Optionally, in an embodiment, the communication apparatus is configured to perform uplink switching on at least three carriers, and the at least three carriers belong to three frequency bands; and
if a radio frequency chain state during last uplink transmission is a first state or a second state, where the first state is that there are two radio frequency chains on a second carrier, and the second state is that there is one radio frequency chain on each of the second carrier and a third carri er,
the processing unit 1100 is configured to:
   determine, based on the first RRC parameter and first indication signaling in the at least three radio frequency chain states supporting the uplink transmission, the state that is after the uplink switching, where
   when the first RRC parameter has a first value, the radio frequency chain state after the uplink switching is a first radio frequency chain state; when the first RRC parameter has a second value, and the first indication signaling has a first value, the radio frequency chain state after the uplink switching is a second radio frequency chain state; or when the first RRC parameter has a second value, and the first indication signaling has a second value, the radio frequency chain state after the uplink switching is a third radio frequency chain state;
   the processing unit 1100 is configured to:
      determine, based on second indication signaling in the at least three radio frequency chain states supporting the uplink transmission, the state that is after the uplink switching, where
      the second indication signaling has at least three values, and a first value, a second value, and a third value in the at least three values respectively correspond to a first radio frequency chain state, a second radio frequency chain state, and a third radio frequency chain state; or
      the processing unit 1100 is configured to:
         determine, based on the first RRC parameter in the at least three radio frequency chain states supporting the uplink transmission, the state that is after the uplink switching, where
         the first RRC parameter has at least three values, and a first value, a second value, and a third value in the at least three values respectively correspond to a first radio frequency chain state, a second radio frequency chain state, and a third radio frequency chain state.

The first radio frequency chain state, the second radio frequency chain state, and the third radio frequency chain state all support the 1-antenna-port uplink transmission to be performed on the first carrier.

Optionally, in an embodiment, the communication apparatus is configured to perform uplink switching on at least four carriers, and the at least four carriers belong to four frequency bands; and
if a radio frequency chain state during last uplink transmission is a first state or a second state, where the first state is that there are two radio frequency chains on a second carrier, and the second state is that there is one radio frequency chain on each of the second carrier and a third carri er,
the processing unit 1100 is configured to:
   determine, based on the first RRC parameter and third indication signaling in the at least three radio frequency chain states supporting the uplink transmission, the radio frequency chain state that is after the uplink switching, where
   when the first RRC parameter has a first value, and the third indication signaling has a first value, the radio frequency chain state after the uplink switching is a first radio frequency chain state; when the first RRC parameter has a first value, and the third indication signaling has a second value, the radio frequency chain state after the uplink switching is a second radio frequency chain state; when the first RRC parameter has a second value, and the third indication signaling has a first value, the radio frequency chain state after the uplink switching is a third radio frequency chain state; or when the first RRC parameter has a second value, and the third indication signaling has a second value, the radio frequency chain state after the uplink switching is a fourth radio frequency chain state; or
   when the first RRC parameter has a first value, the radio frequency chain state after the uplink switching is a first radio frequency chain state; when the first RRC parameter has a second value, and the third indication signaling has a first value, the radio frequency chain state after the uplink switching is a second radio frequency chain state; when the first RRC parameter has a second value, and the third indication signaling has a second value, the radio frequency chain state after the uplink switching is a third radio frequency chain state; or when the first RRC parameter has a second value, and the third indication signaling has a third value, the radio frequency chain state after the uplink switching is a fourth radio frequency chain state;
   the processing unit 1100 is configured to:
      determine, based on fourth indication signaling in the at least three radio frequency chain states supporting the uplink transmission, the radio frequency chain state that is after the uplink switching, where
      the fourth indication signaling has at least four values, and a first value, a second value, a third value, and a fourth value in the at least four values respectively correspond to a first radio frequency chain state, a second radio frequency chain state, a third radio frequency chain state, and a fourth radio frequency chain state; or
      the processing unit 1100 is configured to:
         determine, based on the first RRC parameter in the at least three radio frequency chain states supporting the uplink transmission, the radio frequency chain state that is after the uplink switching, where
         the first RRC parameter has at least four values, and a first value, a second value, a third value, and a fourth value in the at least four values respectively correspond to a first radio frequency chain state, a second radio frequency chain state, a third radio frequency chain state, and a fourth radio frequency chain state.

The first radio frequency chain state, the second radio frequency chain state, the third radio frequency chain state, and the fourth radio frequency chain state all support the 1-antenna-port uplink transmission to be performed on the first carrier.

Optionally, in another implementation, the units in the communication apparatus 1000 are configured to implement the following functions:
The receiving unit 1200 is configured to receive first information, where the first information indicates the communication apparatus to perform 1-antenna-port uplink transmission on a first carrier, and the communication apparatus supports uplink switching performed in at least three frequency bands.

The processing unit 1100 is configured to determine, based on a combination of supported carriers for parallel sending and/or according to a predefined selection policy in at least two radio frequency chain states supporting the uplink transmission, a radio frequency chain state that is after the uplink switching, where
the predefined selection policy includes one or more of the following: a quantity of carriers involved in the uplink switching is smallest, the uplink switching does not involve a carrier on which there is no uplink transmission, the uplink switching does not involve a carrier on which there is no radio frequency chain, or switching time of the uplink switching satisfies a preset condition.

The sending unit 1300 is configured to send the uplink transmission in the radio frequency chain state that is after the uplink switching.

Optionally, in an embodiment, the processing unit 1100 is configured to:
when two or more radio frequency chain states are determined, based on the combination of the supported carriers for the parallel sending and/or according to the predefined selection policy, in the at least two radio frequency chain states supporting the uplink transmission, further determine, based on a second RRC parameter and/or fifth indication signaling in the two or more radio frequency chain states, the radio frequency chain state that is after the uplink switching.

Optionally, in an embodiment, the fifth indication signaling indicates a carrier or a frequency band that needs to be preferentially switched in the uplink switching.

Optionally, in an embodiment, the preset condition includes that the switching time of the uplink switching is shortest or that the switching time of the uplink switching is less than or equal to a specified threshold.

In the foregoing implementations, the receiving unit 1200 and the sending unit 1300 may alternatively be integrated into one transceiver unit, and have both of a receiving function and a sending function. This is not limited herein.

In embodiments in which the communication apparatus 1000 corresponds to the terminal device, the processing unit 1100 is configured to perform processing and/or an operation, other than sending and receiving actions, implemented inside the terminal device, the receiving unit 1200 is configured to perform a receiving action performed by the terminal device, and the sending unit 1300 is configured to perform a sending action performed by the terminal device.

For example, in FIG. 11, the receiving unit 1200 performs an action of receiving the first information in step 510; the processing unit 1100 performs step 520; and the sending unit 1300 performs an action of sending the uplink transmission in step 530.

For another example, in FIG. 12, the receiving unit 1200 performs an action of receiving the first information in step 610; the processing unit 1100 performs step 620; and the sending unit 1300 performs an action of sending the uplink transmission in step 630.

Optionally, the communication apparatus 1000 may correspond to the network device in embodiments of this application.

In an implementation, the units in the communication apparatus 1000 are configured to implement the following functions:
The sending unit 1300 is configured to:
send first information, where the first information indicates a terminal device to perform 1-antenna-port uplink transmission on a first carrier, and the terminal device supports uplink switching performed in at least three frequency bands; and
send a first RRC parameter and/or indication signaling to the terminal device, where the first RRC parameter and/or the indication signaling are/is used by the terminal device to determine, in at least three radio frequency chain states supporting the uplink transmission, a radio frequency chain state that is after the uplink switching.

The receiving unit 1200 is configured to receive the uplink transmission sent by the terminal device in the radio frequency chain state that is after the uplink switching.

Optionally, in an embodiment, the terminal device is configured to perform uplink switching on at least three carriers, and the at least three carriers belong to three frequency bands; and
the sending unit 1300 is configured to:
send the first RRC parameter and first indication signaling to the terminal device, where the first RRC parameter and the first indication signaling are used by the terminal device to determine, in the at least three radio frequency chain states supporting the uplink transmission, the radio frequency chain state that is after the uplink switching, where
when the first RRC parameter has a first value, the radio frequency chain state after the uplink switching is a first radio frequency chain state; when the first RRC parameter has a second value, and the first indication signaling has a first value, the radio frequency chain state after the uplink switching is a second radio frequency chain state; or when the first RRC parameter has a second value, and the first indication signaling has a second value, the radio frequency chain state after the uplink switching is a third radio frequency chain state;
the sending unit 1300 is configured to:
   send second indication signaling to the terminal device, where the second indication signaling is used by the terminal device to determine, in the at least three radio frequency chain states supporting the uplink transmission, the radio frequency chain state that is after the uplink switching, where
   the second indication signaling has at least three values, and a first value, a second value, and a third value in the at least three values respectively correspond to a first radio frequency chain state, a second radio frequency chain state, and a third radio frequency chain state; or
   the sending unit 1300 is configured to:
      send the first RRC parameter to the terminal device, where the first RRC parameter is used by the terminal device to determine, in the at least three radio frequency chain states supporting the uplink transmission, the radio frequency chain state that is after the uplink switching, where
      the first RRC parameter has at least three values, and a first value, a second value, and a third value in the at least three values respectively correspond to a first radio frequency chain state, a second radio frequency chain state, and a third radio frequency chain state.

The first radio frequency chain state, the second radio frequency chain state, and the third radio frequency chain state all support the 1-antenna-port uplink transmission to be performed on the first carrier.

Optionally, in an embodiment, the terminal device is configured to perform uplink switching on at least four carriers, and the at least four carriers belong to four frequency bands; and
the sending unit 1300 is configured to:
send the first RRC parameter and third indication signaling to the terminal device, where the first RRC parameter and the third indication signaling are used by the terminal device to determine, in the at least three radio frequency chain states supporting the uplink transmission, the radio frequency chain state that is after the uplink switching, where
when the first RRC parameter has a first value, and the third indication signaling has a first value, the radio frequency chain state after the uplink switching is a first radio frequency chain state; when the first RRC parameter has a first value, and the third indication signaling has a second value, the radio frequency chain state after the uplink switching is a second radio frequency chain state; when the first RRC parameter has a second value, and the third indication signaling has a first value, the radio frequency chain state after the uplink switching is a third radio frequency chain state; or when the first RRC parameter has a second value, and the third indication signaling has a second value, the radio frequency chain state after the uplink switching is a fourth radio frequency chain state; or
when the first RRC parameter has a first value, the radio frequency chain state after the uplink switching is a first radio frequency chain state; when the first RRC parameter has a second value, and the third indication signaling has a first value, the radio frequency chain state after the uplink switching is a second radio frequency chain state; when the first RRC parameter has a second value, and the third indication signaling has a second value, the radio frequency chain state after the uplink switching is a third radio frequency chain state; or when the first RRC parameter has a second value, and the third indication signaling has a third value, the radio frequency chain state after the uplink switching is a fourth radio frequency chain state;
the sending unit 1300 is configured to:
   send fourth indication signaling to the terminal device, where the fourth indication signaling is used by the terminal device to determine, in the at least three radio frequency chain states supporting the uplink transmission, the radio frequency chain state that is after the uplink switching, where
   the fourth indication signaling has at least four values, and a first value, a second value, a third value, and a fourth value in the at least four values respectively correspond to a first radio frequency chain state, a second radio frequency chain state, a third radio frequency chain state, and a fourth radio frequency chain state; or
   the sending unit 1300 is configured to:
      send the first RRC parameter to the terminal device, where the first RRC parameter is used by the terminal device to determine, in the at least three radio frequency chain states supporting the uplink transmission, the radio frequency chain state that is after the uplink switching, where
      the first RRC parameter has at least four values, and a first value, a second value, a third value, and a fourth value in the at least four values respectively correspond to a first radio frequency chain state, a second radio frequency chain state, a third radio frequency chain state, and a fourth radio frequency chain state.

The first radio frequency chain state, the second radio frequency chain state, the third radio frequency chain state, and the fourth radio frequency chain state all support the 1-antenna-port uplink transmission to be performed on the first carrier.

In another implementation, the units in the communication apparatus 1000 are configured to implement the following functions:
The sending unit 1300 is configured to send first information, where the first information indicates a terminal device to perform 1-antenna-port uplink transmission on a first carrier, and the terminal device supports uplink switching performed in at least three frequency bands.

The processing unit 1100 is configured to determine, based on a combination of carriers that are supported by the terminal device and that are for parallel sending and/or according to a predefined selection policy, a radio frequency chain state that is of the terminal device and that is during the uplink transmission, where the radio frequency chain state during the uplink transmission is a radio frequency chain state that is after the uplink switching, where
the predefined selection policy includes one or more of the following: a quantity of carriers involved in the uplink switching is smallest, the uplink switching does not involve a carrier on which there is no uplink transmission, the uplink switching does not involve a carrier on which there is no radio frequency chain, or switching time of the uplink switching satisfies a preset condition.

The receiving unit 1200 is configured to receive the uplink transmission sent by the terminal device in the radio frequency chain state that is after the uplink switching.

Optionally, in an embodiment, the sending unit 1300 is configured to:
when two or more radio frequency chain states that are of the terminal device and that are during the uplink transmission are determined by the processing unit 1100 based on the combination of the carriers that are supported by the terminal device and that are for the parallel sending and/or according to the predefined selection policy, send a second RRC parameter and/or fifth indication signaling to the terminal device, where
the second RRC parameter and/or the fifth indication signaling indicate/indicates one of the two or more radio frequency chain states to be used as the radio frequency chain state that is of the terminal device and that is during the uplink transmission.

Optionally, in an embodiment, the fifth indication signaling indicates a carrier or a frequency band that needs to be preferentially switched in the uplink switching.

Optionally, in an embodiment, the preset condition includes that the switching time of the uplink switching is shortest or that the switching time of the uplink switching is less than or equal to a specified threshold.

In the foregoing implementations, the receiving unit 1200 and the sending unit 1300 may alternatively be integrated into one transceiver unit, and have both of a receiving function and a sending function. This is not limited herein.

In embodiments in which the communication apparatus 1000 corresponds to the network device, the processing unit 1100 is configured to perform processing and/or an operation, other than sending and receiving actions, implemented inside the network device, the receiving unit 1200 is configured to perform a receiving action performed by the network device, and the sending unit 1300 is configured to perform a sending action performed by the network device.

For example, in FIG. 11, the sending unit 1300 is configured to perform an action of sending the first information in step 510; and the receiving unit 1200 performs an action of receiving the uplink transmission in step 530. In FIG. 12, the sending unit 1300 is configured to perform an action of sending the first information in step 610; and the receiving unit 1200 performs an action of receiving the uplink transmission in step 630. In addition, the processing unit 1100 is further configured to perform an operation, performed by the network device, of determining the radio frequency chain state that is after the uplink switching in the method embodiments.

FIG. 22 is a diagram of a structure of a communication apparatus according to this application. As shown in FIG. 22, the communication apparatus 10 includes one or more processors 11, one or more memories 12, and one or more communication interfaces 13. The processor 11 is configured to control the communication interface 13 to receive and send a signal, the memory 12 is configured to store a computer program, and the processor 11 is configured to: invoke the computer program from the memory 12, and run the computer program, to enable the communication apparatus 10 to perform processing performed by the terminal device or the network device in the method embodiments of this application.

For example, the processor 11 may have a function of the processing unit 1100 shown in FIG. 21, and the communication interface 13 may have a function of the receiving unit 1200 and/or a function of the sending unit 1300 shown in FIG. 21. Specifically, the processor 11 may be configured to perform processing or an operation performed inside the communication apparatus, and the communication interface 13 is configured to perform a sending and/or receiving operation performed by the communication apparatus.

Optionally, in an implementation, the communication apparatus 10 may be the terminal device in the method embodiments. In this implementation, the communication interface 13 may be a transceiver of the terminal device. The transceiver may include a receiver and/or a transmitter. Optionally, the processor 11 may be a baseband apparatus of the terminal device, and the communication interface 13 may be a radio frequency apparatus.

In another implementation, the communication apparatus 10 may be a chip (or a chip system) installed in the terminal device. In this implementation, the communication interface 13 may be an interface circuit or an input/output interface.

Optionally, in an implementation, the communication apparatus 10 may be the network device in the method embodiments. In this implementation, the communication interface 13 may be a transceiver of the network device. The transceiver may include a receiver and/or a transmitter. Optionally, the processor 11 may be a baseband apparatus of the network device, and the communication interface 13 may be a radio frequency apparatus.

In another implementation, the communication apparatus 10 may be a chip (or a chip system) installed in the network device. In this implementation, the communication interface 13 may be an interface circuit or an input/output interface.

In FIG. 22, a dashed-line box behind a component (for example, the processor, the memory, or the communication interface) indicates that there may be at least one component.

In addition, this application further provides a computer-readable storage medium. The computer-readable storage medium stores computer instructions. When the computer instructions are run on a computer, an operation and/or processing performed by the terminal device in the method embodiments of this application are/is enabled to be performed.

This application further provides a computer-readable storage medium. The computer-readable storage medium stores computer instructions. When the computer instructions are run on a computer, an operation and/or processing performed by the network device in the method embodiments of this application are/is enabled to be performed.

This application further provides a computer program product. The computer program product includes computer program code or instructions. When the computer program code or the instructions are run on a computer, an operation and/or processing performed by the terminal device in the method embodiments of this application are/is enabled to be performed.

This application further provides a computer program product. The computer program product includes computer program code or instructions. When the computer program code or the instructions are run on a computer, an operation and/or processing performed by the network device in the method embodiments of this application are/is enabled to be performed.

This application further provides a chip. The chip includes a processor. A memory configured to store a computer program is disposed independent of the chip. The processor is configured to execute the computer program stored in the memory, to enable a communication apparatus in which the chip is installed to perform an operation and/or processing performed by the terminal device in any method embodiment.

This application further provides a chip. The chip includes a processor. A memory configured to store a computer program is disposed independent of the chip. The processor is configured to execute the computer program stored in the memory, to enable a communication apparatus in which the chip is installed to perform an operation and/or processing performed by the network device in any method embodiment.

Further, the chip may include a communication interface. The communication interface may be an input/output interface, an interface circuit, or the like. Further, the chip may include the memory. Optionally, there may be one or more processors, there may be one or more memories, and there may be one or more memories.

This application further provides a communication apparatus (for example, may be a chip or a chip system), including a processor and a communication interface. The communication interface is configured to receive (in other words, input) data and/or information, and transmit the received data and/or information to the processor. The processor processes the data and/or information. In addition, the communication interface is further configured to output (in other words, output) data and/or information that are/is obtained through processing by the processor, to enable an operation and/or processing performed by the terminal device in any method embodiments to be performed. This application further provides a communication apparatus (for example, may be a chip or a chip system), including a processor and a communication interface. The communication interface is configured to receive (in other words, input) data and/or information, and transmit the received data and/or information to the processor. The processor processes the data and/or information. In addition, the communication interface is further configured to output (in other words, output) data and/or information that are/is obtained through processing by the processor, to enable an operation and/or processing performed by the network device in any method embodiments to be performed. This application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the terminal device in any method embodiment.

This application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the network device in any method embodiment.

This application further provides a wireless communication system, including the terminal device in the method embodiments of this application. Optionally, wireless communication system may further include the network device in the method embodiments.

A processor in embodiments of this application may be an integrated circuit chip, and has a signal processing capability. In an implementation process, steps in the foregoing method embodiments may be completed by using a hardware integrated logical circuit in the processor or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memory in the system and the methods in this specification aims to include, but not limited to, these and any memory of another appropriate type.

All or some of the methods provided in the foregoing embodiments may be implemented by software, hardware, firmware, or any combination thereof. When software is used to implement the methods, all or some of the methods may be implemented in a form of a computer program product. The computer program product may include one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer or a data storage device, for example, a server or a data center, integrating one or more usable media.

To clearly describe the technical solutions in embodiments of this application, terms such as "first" and "second" are used in embodiments of this application to distinguish between same items or similar items that have basically same functions and effects. For example, the first indication signaling and the second indication signaling are merely for distinguishing descriptions of indication signaling in two implementations. A person skilled in the art may understand that numbers such as "first" and "second" do not limit a quantity and a time sequence. In addition, numbers such as "first" and "second" do not indicate a definite difference. For example, the first indication signaling and the second indication signaling may be same indication signaling.

The term "and/or" in this application is merely an association relationship for describing associated objects, and indicates that three relationships may exist. For example, A and/or B may represent: Only A exists, both A and B exist, and only B exists. A, B, and C may all be singular or plural, and are not limited.

A person of ordinary skill in the art may be aware that, with reference to the units and algorithm steps in the examples described in embodiments disclosed in this specification, this application can be implemented by electronic hardware or a combination of computer software and the electronic hardware. Whether the functions are performed by hardware or software depends on particular applications and design constraint conditions of the technical solutions. A person skilled in the art may use different methods to implement the functions for each particular application, but it should not be considered that the implementation goes beyond the scope of this application.

In the several embodiments provided in this application, it should be understood that the disclosed system, apparatus, and method may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An uplink transmission method, comprising:
receiving, by a terminal device, first information, wherein the first information indicates the terminal device to perform 1-antenna-port uplink transmission on a first carrier, and the terminal device supports uplink switching performed in at least three frequency bands;
determining, by the terminal device based on a first radio resource control RRC parameter and/or indication signaling in at least three radio frequency chain states supporting the uplink transmission, a radio frequency chain state that is after the uplink switching; and
sending, by the terminal device, the uplink transmission in the radio frequency chain state that is after the uplink switching.

2. The method according to claim 1, wherein the terminal device is configured to perform uplink switching on at least three carriers, and the at least three carriers belong to three frequency bands; and
if a radio frequency chain state during last uplink transmission is a first state or a second state, wherein the first state is that there are two radio frequency chains on a second carrier, and the second state is that there is one radio frequency chain on each of the second carrier and a third carrier,
the determining, by the terminal device based on a first RRC parameter and/or indication signaling in at least three radio frequency chain states supporting the uplink transmission, a radio frequency chain state that is after the uplink switching comprises:
determining, by the terminal device based on the first RRC parameter and first indication signaling in the at least three radio frequency chain states supporting the uplink transmission, the state that is after the uplink switching, wherein
when the first RRC parameter has a first value, the radio frequency chain state after the uplink switching is a first radio frequency chain state; when the first RRC parameter has a second value, and the first indication signaling has a first value, the radio frequency chain state after the uplink switching is a second radio frequency chain state; or when the first RRC parameter has a second value, and the first indication signaling has a second value, the radio frequency chain state after the uplink switching is a third radio frequency chain state; or
the determining, by the terminal device based on a first RRC parameter and/or indication signaling in at least three radio frequency chain states supporting the uplink transmission, a radio frequency chain state that is after the uplink switching comprises:
determining, by the terminal device based on second indication signaling in the at least three radio frequency chain states supporting the uplink transmission, the state that is after the uplink switching, wherein
the second indication signaling has at least three values, and a first value, a second value, and a third value in the at least three values respectively correspond to a first radio frequency chain state, a second radio frequency chain state, and a third radio frequency chain state; or
the determining, by the terminal device based on a first RRC parameter and/or indication signaling in at least three radio frequency chain states supporting the uplink transmission, a radio frequency chain state that is after the uplink switching comprises:
determining, by the terminal device based on the first RRC parameter in the at least three radio frequency chain states supporting the uplink transmission, the state that is after the uplink switching, wherein
the first RRC parameter has at least three values, and a first value, a second value, and a third value in the at least three values respectively correspond to a first radio frequency chain state, a second radio frequency chain state, and a third radio frequency chain state.

3. The method according to claim 1, wherein the terminal device is configured to perform uplink switching on at least four carriers, and the at least four carriers belong to four frequency bands; and
if a radio frequency chain state during last uplink transmission is a first state or a second state, wherein the first state is that there are two radio frequency chains on a second carrier, and the second state is that there is one radio frequency chain on each of the second carrier and a third carrier,
the determining, by the terminal device based on a first RRC parameter and/or indication signaling in at least three radio frequency chain states supporting the uplink transmission, a radio frequency chain state that is after the uplink switching comprises:
determining, by the terminal device based on the first RRC parameter and third indication signaling in the at least three radio frequency chain states supporting the uplink transmission, the radio frequency chain state that is after the uplink switching, wherein
when the first RRC parameter has a first value, and the third indication signaling has a first value, the radio frequency chain state after the uplink switching is a first radio frequency chain state; when the first RRC parameter has a first value, and the third indication signaling has a second value, the radio frequency chain state after the uplink switching is a second radio frequency chain state; when the first RRC parameter has a second value, and the third indication signaling has a first value, the radio frequency chain state after the uplink switching is a third radio frequency chain state; or when the first RRC parameter has a second value, and the third indication signaling has a second value, the radio frequency chain state after the uplink switching is a fourth radio frequency chain state; or
when the first RRC parameter has a first value, the radio frequency chain state after the uplink switching is a first radio frequency chain state; when the first RRC parameter has a second value, and the third indication signaling has a first value, the radio frequency chain state after the uplink switching is a second radio frequency chain state; when the first RRC parameter has a second value, and the third indication signaling has a second value, the radio frequency chain state after the uplink switching is a third radio frequency chain state; or when the first RRC parameter has a second value, and the third indication signaling has a third value, the radio frequency chain state after the uplink switching is a fourth radio frequency chain state;
the determining, by the terminal device based on a first RRC parameter and/or indication signaling in at least three radio frequency chain states supporting the uplink transmission, a radio frequency chain state that is after the uplink switching comprises:
determining, by the terminal device based on fourth indication signaling in the at least three radio frequency chain states supporting the uplink transmission, the radio frequency chain state that is after the uplink switching, wherein
the fourth indication signaling has at least four values, and a first value, a second value, a third value, and a fourth value in the at least four values respectively correspond to a first radio frequency chain state, a second radio frequency chain state, a third radio frequency chain state, and a fourth radio frequency chain state; or
the determining, by the terminal device based on a first RRC parameter and/or indication signaling in at least three radio frequency chain states supporting the uplink transmission, a radio frequency chain state that is after the uplink switching comprises:
determining, by the terminal device based on the first RRC parameter in the at least three radio frequency chain states supporting the uplink transmission, the radio frequency chain state that is after the uplink switching, wherein
the first RRC parameter has at least four values, and a first value, a second value, a third value, and a fourth value in the at least four values respectively correspond to a first radio frequency chain state, a second radio frequency chain state, a third radio frequency chain state, and a fourth radio frequency chain state.

4. An uplink transmission method, comprising:
receiving, by a terminal device, first information, wherein the first information indicates the terminal device to perform 1-antenna-port uplink transmission on a first carrier, and the terminal device supports uplink switching performed in at least three frequency bands;
determining, by the terminal device based on a combination of supported carriers for parallel sending and/or according to a predefined selection policy in at least two radio frequency chain states supporting the uplink transmission, a radio frequency chain state that is after the uplink switching, wherein
the predefined selection policy comprises one or more of the following: a quantity of carriers involved in the uplink switching is smallest, the uplink switching does not involve a carrier on which there is no uplink transmission, the uplink switching does not involve a carrier on which there is no radio frequency chain, or switching time of the uplink switching satisfies a preset condition; and
sending, by the terminal device, the uplink transmission in the radio frequency chain state that is after the uplink switching.

5. The method according to claim 4, wherein the determining, by the terminal device based on a combination of supported carriers for parallel sending and/or according to a predefined selection policy in at least two radio frequency chain states supporting the uplink transmission, a radio frequency chain state that is after the uplink switching comprises:
when two or more radio frequency chain states are determined, based on the combination of the carriers that are supported by the terminal device and that are for the parallel sending and/or according to the predefined selection policy, in the at least two radio frequency chain states supporting the uplink transmission, further determining, by the terminal device based on a second RRC parameter and/or fifth indication signaling in the two or more radio frequency chain states, the radio frequency chain state that is after the uplink switching.

6. The method according to claim 5, wherein the fifth indication signaling indicates a carrier or a frequency band that needs to be preferentially switched in the uplink switching.

7. The method according to any one of claims 4 to 6, wherein the preset condition comprises that the switching time of the uplink switching is shortest or that the switching time of the uplink switching is less than or equal to a specified threshold.

8. An uplink transmission method, comprising:
sending, by a network device, first information, wherein the first information indicates a terminal device to perform 1-antenna-port uplink transmission on a first carrier, and the terminal device supports uplink switching performed in at least three frequency bands;
sending, by the network device, a first RRC parameter and/or indication signaling to the terminal device, wherein the first RRC parameter and/or the indication signaling are/is for the terminal device to determine, in at least three radio frequency chain states supporting the uplink transmission, a radio frequency chain state that is after the uplink switching; and
receiving, by the network device, the uplink transmission from the terminal device in the radio frequency chain state that is after the uplink switching.

9. The method according to claim 8, wherein the terminal device is configured to perform uplink switching on at least three carriers, and the at least three carriers belong to three frequency bands; and
the sending, by the network device, a first RRC parameter and/or indication signaling to the terminal device comprises:
sending, by the network device, the first RRC parameter and first indication signaling to the terminal device, wherein the first RRC parameter and the first indication signaling are for the terminal device to determine, in the at least three radio frequency chain states supporting the uplink transmission, the radio frequency chain state that is after the uplink switching, wherein
when the first RRC parameter has a first value, the radio frequency chain state after the uplink switching is a first radio frequency chain state; when the first RRC parameter has a second value, and the first indication signaling has a first value, the radio frequency chain state after the uplink switching is a second radio frequency chain state; or when the first RRC parameter has a second value, and the first indication signaling has a second value, the radio frequency chain state after the uplink switching is a third radio frequency chain state; or
sending, by the network device, second indication signaling to the terminal device, wherein the second indication signaling is for the terminal device to determine, in the at least three radio frequency chain states supporting the uplink transmission, the radio frequency chain state that is after the uplink switching, wherein
the second indication signaling has at least three values, and a first value, a second value, and a third value in the at least three values respectively correspond to a first radio frequency chain state, a second radio frequency chain state, and a third radio frequency chain state; or
sending, by the network device, the first RRC parameter to the terminal device, wherein the first RRC parameter is for the terminal device to determine, in the at least three radio frequency chain states supporting the uplink transmission, the radio frequency chain state that is after the uplink switching, wherein
the first RRC parameter has at least three values, and a first value, a second value, and a third value in the at least three values respectively correspond to a first radio frequency chain state, a second radio frequency chain state, and a third radio frequency chain state.

10. The method according to claim 8, wherein the terminal device is configured to perform uplink switching on at least four carriers, and the at least four carriers belong to four frequency bands; and
the sending, by the network device, a first RRC parameter and/or indication signaling to the terminal device comprises:
sending, by the network device, the first RRC parameter and third indication signaling to the terminal device, wherein the first RRC parameter and the third indication signaling are for the terminal device to determine, in the at least three radio frequency chain states supporting the uplink transmission, the radio frequency chain state that is after the uplink switching, wherein
when the first RRC parameter has a first value, and the third indication signaling has a first value, the radio frequency chain state after the uplink switching is a first radio frequency chain state; when the first RRC parameter has a first value, and the third indication signaling has a second value, the radio frequency chain state after the uplink switching is a second radio frequency chain state; when the first RRC parameter has a second value, and the third indication signaling has a first value, the radio frequency chain state after the uplink switching is a third radio frequency chain state; or when the first RRC parameter has a second value, and the third indication signaling has a second value, the radio frequency chain state after the uplink switching is a fourth radio frequency chain state; or
when the first RRC parameter has a first value, the radio frequency chain state after the uplink switching is a first radio frequency chain state; when the first RRC parameter has a second value, and the third indication signaling has a first value, the radio frequency chain state after the uplink switching is a second radio frequency chain state; when the first RRC parameter has a second value, and the third indication signaling has a second value, the radio frequency chain state after the uplink switching is a third radio frequency chain state; or when the first RRC parameter has a second value, and the third indication signaling has a third value, the radio frequency chain state after the uplink switching is a fourth radio frequency chain state;
sending, by the network device, fourth indication signaling to the terminal device, wherein the fourth indication signaling is for the terminal device to determine, in the at least three radio frequency chain states supporting the uplink transmission, the radio frequency chain state that is after the uplink switching, wherein
the fourth indication signaling has at least four values, and a first value, a second value, a third value, and a fourth value in the at least four values respectively correspond to a first radio frequency chain state, a second radio frequency chain state, a third radio frequency chain state, and a fourth radio frequency chain state; or
sending, by the network device, the first RRC parameter to the terminal device, wherein the first RRC parameter is for the terminal device to determine, in the at least three radio frequency chain states supporting the uplink transmission, the radio frequency chain state that is after the uplink switching, wherein
the first RRC parameter has at least four values, and a first value, a second value, a third value, and a fourth value in the at least four values respectively correspond to a first radio frequency chain state, a second radio frequency chain state, a third radio frequency chain state, and a fourth radio frequency chain state.

11. An uplink transmission method, comprising:
sending, by a network device, first information, wherein the first information indicates a terminal device to perform 1-antenna-port uplink transmission on a first carrier, and the terminal device supports uplink switching performed in at least three frequency bands;
determining, by the network device based on a combination of carriers that are supported by the terminal device and that are for parallel sending and/or according to a predefined selection policy, a radio frequency chain state that is of the terminal device and that is during the uplink transmission, wherein the radio frequency chain state during the uplink transmission is a radio frequency chain state that is after the uplink switching, wherein
the predefined selection policy comprises one or more of the following: a quantity of carriers involved in the uplink switching is smallest, the uplink switching does not involve a carrier on which there is no uplink transmission, the uplink switching does not involve a carrier on which there is no radio frequency chain, or switching time of the uplink switching satisfies a preset condition; and
receiving, by the network device, the uplink transmission from the terminal device in the radio frequency chain state that is after the uplink switching.

12. The method according to claim 11, wherein the method further comprises:
when two or more radio frequency chain states that are of the terminal device and that are during the uplink transmission are determined by the network device based on the combination of the carriers that are supported by the terminal device and that are for the parallel sending and/or according to the predefined selection policy, sending, by the network device, a second RRC parameter and/or fifth indication signaling to the terminal device, wherein
the second RRC parameter and/or the fifth indication signaling indicate/indicates one of the two or more radio frequency chain states to be used as the radio frequency chain state that is of the terminal device and that is during the uplink transmission.

13. The method according to claim 12, wherein the fifth indication signaling indicates a carrier or a frequency band that needs to be preferentially switched in the uplink switching.

14. The method according to any one of claims 11 to 13, wherein the preset condition comprises that the switching time of the uplink switching is shortest or that the switching time of the uplink switching is less than or equal to a specified threshold.

15. A communication apparatus, comprising:
a receiving unit, configured to receive first information, wherein the first information indicates the communication apparatus to perform 1-antenna-port uplink transmission on a first carrier, and the communication apparatus supports uplink switching performed in at least three frequency bands;
a processing unit, configured to determine, based on a first radio resource control RRC parameter and/or indication signaling in at least three radio frequency chain states supporting the uplink transmission, a radio frequency chain state that is after the uplink switching; and
a sending unit, configured to send the uplink transmission in the radio frequency chain state that is after the uplink switching.

16. The communication apparatus according to claim 15, wherein the communication apparatus is configured to perform uplink switching on at least three carriers, and the at least three carriers belong to three frequency bands; and
if a radio frequency chain state during last uplink transmission is a first state or a second state, wherein the first state is that there are two radio frequency chains on a second carrier, and the second state is that there is one radio frequency chain on each of the second carrier and a third carrier,
the processing unit is configured to:
determine, based on the first RRC parameter and first indication signaling in the at least three radio frequency chain states supporting the uplink transmission, the state that is after the uplink switching, wherein
when the first RRC parameter has a first value, the radio frequency chain state after the uplink switching is a first radio frequency chain state; when the first RRC parameter has a second value, and the first indication signaling has a first value, the radio frequency chain state after the uplink switching is a second radio frequency chain state; or when the first RRC parameter has a second value, and the first indication signaling has a second value, the radio frequency chain state after the uplink switching is a third radio frequency chain state;
the processing unit is configured to:
determine, based on second indication signaling in the at least three radio frequency chain states supporting the uplink transmission, the state that is after the uplink switching, wherein
the second indication signaling has at least three values, and a first value, a second value, and a third value in the at least three values respectively correspond to a first radio frequency chain state, a second radio frequency chain state, and a third radio frequency chain state; or
the processing unit is configured to:
determine, based on the first RRC parameter in the at least three radio frequency chain states supporting the uplink transmission, the state that is after the uplink switching, wherein
the first RRC parameter has at least three values, and a first value, a second value, and a third value in the at least three values respectively correspond to a first radio frequency chain state, a second radio frequency chain state, and a third radio frequency chain state.

17. The communication apparatus according to claim 15, wherein the communication apparatus is configured to perform uplink switching on at least four carriers, and the at least four carriers belong to four frequency bands; and
if a radio frequency chain state during last uplink transmission is a first state or a second state, wherein the first state is that there are two radio frequency chains on a second carrier, and the second state is that there is one radio frequency chain on each of the second carrier and a third carrier,
the processing unit is configured to:
determine, based on the first RRC parameter and third indication signaling in the at least three radio frequency chain states supporting the uplink transmission, the radio frequency chain state that is after the uplink switching, wherein
when the first RRC parameter has a first value, and the third indication signaling has a first value, the radio frequency chain state after the uplink switching is a first radio frequency chain state; when the first RRC parameter has a first value, and the third indication signaling has a second value, the radio frequency chain state after the uplink switching is a second radio frequency chain state; when the first RRC parameter has a second value, and the third indication signaling has a first value, the radio frequency chain state after the uplink switching is a third radio frequency chain state; or when the first RRC parameter has a second value, and the third indication signaling has a second value, the radio frequency chain state after the uplink switching is a fourth radio frequency chain state; or
when the first RRC parameter has a first value, the radio frequency chain state after the uplink switching is a first radio frequency chain state; when the first RRC parameter has a second value, and the third indication signaling has a first value, the radio frequency chain state after the uplink switching is a second radio frequency chain state; when the first RRC parameter has a second value, and the third indication signaling has a second value, the radio frequency chain state after the uplink switching is a third radio frequency chain state; or when the first RRC parameter has a second value, and the third indication signaling has a third value, the radio frequency chain state after the uplink switching is a fourth radio frequency chain state;
the processing unit is configured to:
determine, based on fourth indication signaling in the at least three radio frequency chain states supporting the uplink transmission, the radio frequency chain state that is after the uplink switching, wherein
the fourth indication signaling has at least four values, and a first value, a second value, a third value, and a fourth value in the at least four values respectively correspond to a first radio frequency chain state, a second radio frequency chain state, a third radio frequency chain state, and a fourth radio frequency chain state; or
the processing unit is configured to:
determine, based on the first RRC parameter in the at least three radio frequency chain states supporting the uplink transmission, the radio frequency chain state that is after the uplink switching, wherein
the first RRC parameter has at least four values, and a first value, a second value, a third value, and a fourth value in the at least four values respectively correspond to a first radio frequency chain state, a second radio frequency chain state, a third radio frequency chain state, and a fourth radio frequency chain state.

18. A communication apparatus, comprising:
a receiving unit, configured to receive first information, wherein the first information indicates the communication apparatus to perform 1-antenna-port uplink transmission on a first carrier, and the communication apparatus supports uplink switching performed in at least three frequency bands;
a processing unit, configured to determine, based on a combination of supported carriers for parallel sending and/or according to a predefined selection policy in at least two radio frequency chain states supporting the uplink transmission, a radio frequency chain state that is after the uplink switching, wherein
the predefined selection policy comprises one or more of the following: a quantity of carriers involved in the uplink switching is smallest, the uplink switching does not involve a carrier on which there is no uplink transmission, the uplink switching does not involve a carrier on which there is no radio frequency chain, or switching time of the uplink switching satisfies a preset condition; and
a sending unit, configured to send the uplink transmission in the radio frequency chain state that is after the uplink switching.

19. The communication apparatus according to claim 18, wherein the processing unit is configured to:
when two or more radio frequency chain states are determined, based on the combination of the carriers that are supported by the communication apparatus and that are for the parallel sending and/or according to the predefined selection policy, in the at least two radio frequency chain states supporting the uplink transmission, further determine, based on a second RRC parameter and/or fifth indication signaling in the two or more radio frequency chain states, the radio frequency chain state that is after the uplink switching.

20. The communication apparatus according to claim 19, wherein the fifth indication signaling indicates a carrier or a frequency band that needs to be preferentially switched in the uplink switching.

21. The communication apparatus according to any one of claims 18 to 20, wherein the preset condition comprises that the switching time of the uplink switching is shortest or that the switching time of the uplink switching is less than or equal to a specified threshold.

22. A communication apparatus, comprising:
a sending unit, configured to send first information, wherein the first information indicates a terminal device to perform 1-antenna-port uplink transmission on a first carrier, and the terminal device supports uplink switching performed in at least three frequency bands, wherein
the sending unit is further configured to send a first RRC parameter and/or indication signaling to the terminal device, wherein the first RRC parameter and/or the indication signaling are/is for the terminal device to determine, in at least three radio frequency chain states supporting the uplink transmission, a radio frequency chain state that is after the uplink switching; and
a receiving unit, configured to receive the uplink transmission from the terminal device in the radio frequency chain state that is after the uplink switching.

23. The communication apparatus according to claim 22, wherein the terminal device is configured to perform uplink switching on at least three carriers, and the at least three carriers belong to three frequency bands; and
the sending unit is configured to:
send the first RRC parameter and first indication signaling to the terminal device, wherein the first RRC parameter and the first indication signaling are for the terminal device to determine, in the at least three radio frequency chain states supporting the uplink transmission, the radio frequency chain state that is after the uplink switching, wherein
when the first RRC parameter has a first value, the radio frequency chain state after the uplink switching is a first radio frequency chain state; when the first RRC parameter has a second value, and the first indication signaling has a first value, the radio frequency chain state after the uplink switching is a second radio frequency chain state; or when the first RRC parameter has a second value, and the first indication signaling has a second value, the radio frequency chain state after the uplink switching is a third radio frequency chain state;
the sending unit is configured to:
send second indication signaling to the terminal device, wherein the second indication signaling is for the terminal device to determine, in the at least three radio frequency chain states supporting the uplink transmission, the radio frequency chain state that is after the uplink switching, wherein
the second indication signaling has at least three values, and a first value, a second value, and a third value in the at least three values respectively correspond to a first radio frequency chain state, a second radio frequency chain state, and a third radio frequency chain state; or
the sending unit is configured to:
send the first RRC parameter to the terminal device, wherein the first RRC parameter is for the terminal device to determine, in the at least three radio frequency chain states supporting the uplink transmission, the radio frequency chain state that is after the uplink switching, wherein
the first RRC parameter has at least three values, and a first value, a second value, and a third value in the at least three values respectively correspond to a first radio frequency chain state, a second radio frequency chain state, and a third radio frequency chain state.

24. The communication apparatus according to claim 22, wherein the terminal device is configured to perform uplink switching on at least four carriers, and the at least four carriers belong to four frequency bands; and
the sending unit is configured to:
send the first RRC parameter and third indication signaling to the terminal device, wherein the first RRC parameter and the third indication signaling are for the terminal device to determine, in the at least three radio frequency chain states supporting the uplink transmission, the radio frequency chain state that is after the uplink switching, wherein
when the first RRC parameter has a first value, and the third indication signaling has a first value, the radio frequency chain state after the uplink switching is a first radio frequency chain state; when the first RRC parameter has a first value, and the third indication signaling has a second value, the radio frequency chain state after the uplink switching is a second radio frequency chain state; when the first RRC parameter has a second value, and the third indication signaling has a first value, the radio frequency chain state after the uplink switching is a third radio frequency chain state; or when the first RRC parameter has a second value, and the third indication signaling has a second value, the radio frequency chain state after the uplink switching is a fourth radio frequency chain state; or
when the first RRC parameter has a first value, the radio frequency chain state after the uplink switching is a first radio frequency chain state; when the first RRC parameter has a second value, and the third indication signaling has a first value, the radio frequency chain state after the uplink switching is a second radio frequency chain state; when the first RRC parameter has a second value, and the third indication signaling has a second value, the radio frequency chain state after the uplink switching is a third radio frequency chain state; or when the first RRC parameter has a second value, and the third indication signaling has a third value, the radio frequency chain state after the uplink switching is a fourth radio frequency chain state;
the sending unit is configured to:
send fourth indication signaling to the terminal device, wherein the fourth indication signaling is for the terminal device to determine, in the at least three radio frequency chain states supporting the uplink transmission, the radio frequency chain state that is after the uplink switching, wherein
the fourth indication signaling has at least four values, and a first value, a second value, a third value, and a fourth value in the at least four values respectively correspond to a first radio frequency chain state, a second radio frequency chain state, a third radio frequency chain state, and a fourth radio frequency chain state; or
the sending unit is configured to:
send the first RRC parameter to the terminal device, wherein the first RRC parameter is for the terminal device to determine, in the at least three radio frequency chain states supporting the uplink transmission, the radio frequency chain state that is after the uplink switching, wherein
the first RRC parameter has at least four values, and a first value, a second value, a third value, and a fourth value in the at least four values respectively correspond to a first radio frequency chain state, a second radio frequency chain state, a third radio frequency chain state, and a fourth radio frequency chain state.

25. A communication apparatus, comprising:
a sending unit, configured to send first information, wherein the first information indicates a terminal device to perform 1-antenna-port uplink transmission on a first carrier, and the terminal device supports uplink switching performed in at least three frequency bands;
a processing unit, configured to determine, based on a combination of carriers that are supported by the terminal device and that are for parallel sending and/or according to a predefined selection policy, a radio frequency chain state that is of the terminal device and that is during the uplink transmission, wherein the radio frequency chain state during the uplink transmission is a radio frequency chain state that is after the uplink switching, wherein
the predefined selection policy comprises one or more of the following: a quantity of carriers involved in the uplink switching is smallest, the uplink switching does not involve a carrier on which there is no uplink transmission, the uplink switching does not involve a carrier on which there is no radio frequency chain, or switching time of the uplink switching satisfies a preset condition; and
a receiving unit, configured to receive the uplink transmission from the terminal device in the radio frequency chain state that is after the uplink switching.

26. The communication apparatus according to claim 25, wherein the sending unit is further configured to:
when two or more radio frequency chain states that are of the terminal device and that are during the uplink transmission are determined by the processing unit based on the combination of the carriers that are supported by the terminal device and that are for the parallel sending and/or according to the predefined selection policy, send a second RRC parameter and/or fifth indication signaling to the terminal device, wherein
the second RRC parameter and/or the fifth indication signaling indicate/indicates one of the two or more radio frequency chain states to be used as the radio frequency chain state that is of the terminal device and that is during the uplink transmission.

27. The communication apparatus according to claim 26, wherein the fifth indication signaling indicates a carrier or a frequency band that needs to be preferentially switched in the uplink switching.

28. The communication apparatus according to any one of claims 25 to 27, wherein the preset condition comprises that the switching time of the uplink switching is shortest or that the switching time of the uplink switching is less than or equal to a specified threshold.

29. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 7 or the method according to any one of claims 8 to 14.

30. A chip, comprising a processor and a communication interface, wherein the communication interface is configured to receive data and/or information, and transmit the received data and/or information to the processor, and the processor processes the data and/or the information, to perform the method according to any one of claims 1 to 7 or the method according to any one of claims 8 to 14.

31. A computer-readable storage medium, wherein the computer-readable storage medium stores computer instructions; and when the computer instructions are run on a computer, the method according to any one of claims 1 to 7 or the method according to any one of claims 8 to 14 is enabled to be implemented.

32. A computer program product, wherein the computer program product comprises computer program code; and when the computer program code is run on a computer, the method according to any one of claims 1 to 7 or the method according to any one of claims 8 to 14 is enabled to be implemented.
